# EUROPEAN PATENT APPLICATION

(11) **EP 4 362 158 A1**
(43) Date of publication of application: **01.05.2024**
(21) Application number: 22828477.4
(22) Date of filing: 22.06.2022
(51) Int. Cl.: H01M 10/054, H01M 10/0567, H01M 10/0568, H01M 10/0569

(54) **NON-AQUEOUS ELECTROLYTE SOLUTION, NON-AQUEOUS SODIUM-ION BATTERY, NON-AQUEOUS POTASSIUM-ION BATTERY, METHOD FOR MANUFACTURING NON-AQUEOUS SODIUM-ION BATTERY, AND METHOD FOR MANUFACTURING NON-AQUEOUS POTASSIUM-ION BATTERY**

(30) Priority: 23.06.2021 JP 2021104481
(71) Applicant: Central Glass Co., Ltd., Yamaguchi 755-0001 (JP)
(72) Inventor: KAWAHARA Kei, Ube-shi, Yamaguchi 755-0001 (JP); SHIMIZU Genki, Ube-shi, Yamaguchi 755-0001 (JP); MORINAKA Takayoshi, Ube-shi, Yamaguchi 755-0001 (JP)
(74) Representative: Mewburn Ellis LLP
(86) International application number: PCT/JP2022/024992
(87) International publication number: WO 2022/270561

(57) **Abstract**

Provided are a nonaqueous electrolyte solution for a sodium ion battery or a potassium ion battery including (I) a nonaqueous organic solvent, (II) a solute of an ionic salt, and (III) at least one selected from the group consisting of an organochlorine compound, a phosphorus compound having a P-Cl bond, a sulfone compound having an S(=O)₂-Cl bond, a sulfine compound having an S(=O)-Cl bond, and a silicon compound having a Si-Cl bond; a nonaqueous sodium ion battery and a nonaqueous potassium ion battery using the same; a method for producing the nonaqueous sodium ion battery; and a method for producing the nonaqueous potassium ion battery.

## Description

### TECHNICAL FIELD

One embodiment of the present disclosure relates to a nonaqueous electrolyte solution, a nonaqueous sodium ion battery and a nonaqueous potassium ion battery using the same, a method for producing the nonaqueous sodium ion battery, and a method for producing the nonaqueous potassium ion battery.

### BACKGROUND ART

In recent years, lithium ion batteries are attracting attention as power storage systems for information-related devices and communication devices, that is, power storage systems for compact and high-energy-density applications such as personal computers, video cameras, digital still cameras, and mobile phones and power storage systems for large-scale power applications such as electric vehicles, hybrid vehicles, auxiliary power sources for fuel cell vehicles, and power storage. On the other hand, a price of lithium has increased, and a sodium ion battery and a potassium ion battery, which are less expensive, have attracted attention as a next generation secondary battery.

In general, in a nonaqueous sodium ion battery or a nonaqueous potassium ion battery, a nonaqueous electrolyte solution or a nonaqueous electrolyte solution pseudo-solidified by a gelling agent is used as an ionic conductor. In this configuration, an aprotic solvent is used as the solvent, and a sodium salt is used as a solute in the nonaqueous sodium ion battery and a potassium salt is used as a solute in the nonaqueous potassium ion battery.

In the nonaqueous sodium ion battery or the nonaqueous potassium ion battery, when a sodium cation or a potassium cation is inserted into a negative electrode at the time of initial charging, the negative electrode and the cation, or the negative electrode and a solvent of the electrolyte solution react with each other to form, on a surface of the negative electrode, a film containing a carbonate or an oxide of sodium or potassium as a main component. The film on the surface of the electrode is called a solid electrolyte interface (SEI), and properties thereof have a major impact on battery characteristics. In order to improve the battery characteristics such as a cycle characteristic and durability, it is important to form a stable SEI having high ionic conductivity and low electronic conductivity. And, actively forming a good SEI that reduces or prevents deterioration due to decomposition of the electrolyte solution on a surface of an active positive electrode or negative electrode has been tried by adding a small amount of compounds called additives to the electrolyte solution.

For example, regarding the nonaqueous sodium ion battery, Patent Literature 1 discloses that the use of a saturated cyclic carbonate having a fluoro group or a chain carbonate having a fluoro group as an additive of an electrolyte solution for a nonaqueous sodium ion battery reduces or prevents decomposition of an electrolyte solution on a surface of a negative electrode and improves durability.

Similarly, Patent Literature 2 discloses that the use of sodium monofluorophosphate or sodium difluorophosphate as an additive for an electrolyte solution for a nonaqueous sodium ion battery improves a battery life.

Similarly, Patent Literature 3 discloses that an addition of a cyclic sulfuric ester as an additive for an electrolyte solution for a nonaqueous sodium ion battery reduces negative electrode resistance.

For example, regarding a nonaqueous potassium ion battery, Non Patent Literature 1 shows that the use of fluoroethylene carbonate as an additive for an electrolyte solution for a nonaqueous potassium ion battery improves charge and discharge efficiency.

### CITATION LIST

### PATENT LITERATURE

Patent Literature 1: JB6086467B
Patent Literature 2: JB6378749B
Patent Literature 3: JP2019-046614A

### NON-PATENT LITERATURE

Non Patent Literature 1: Journal of Materials ChemistryA 2017, 5, 5208-5211

### SUMMARY OF INVENTION

### TECHNICAL PROBLEM

The nonaqueous sodium ion battery or the nonaqueous potassium ion battery has already started to be put into practical use, but there are various problems to be solved in applications where the battery is used at a high temperature for a long period of time, such as automobiles.

Accordingly, one of objects of an embodiment of the present disclosure is to provide a nonaqueous electrolyte solution capable of achieving at least one of improvement in cycle characteristic at a high temperature of 60°C or higher, prevention or reduction of an increase in resistance, and reduction of gas generation in a nonaqueous sodium ion battery or a nonaqueous potassium ion battery, a nonaqueous sodium ion battery and a nonaqueous potassium ion battery using the same, a method for producing the nonaqueous sodium ion battery, and a method for producing the nonaqueous potassium ion battery.

### SOLUTION TO PROBLEM

As a result of intensive studies in view of such a problem, the present inventors have found a completely unexpected effect unique to a nonaqueous sodium ion battery and a nonaqueous potassium ion battery in which an electrolyte solution containing a chlorine compound, which has been considered to cause elution of an aluminum component from an aluminum foil of a positive electrode current collector in a nonaqueous lithium ion battery in the related art to deteriorate battery performance, improves a cycle characteristic, reduces or prevents an increase in resistance, and reduces gas generation in a high temperature environment in the nonaqueous sodium ion battery and the nonaqueous potassium ion battery, and have completed the present disclosure.

That is, the present disclosure includes the following embodiments.
[1] A nonaqueous electrolyte solution for a sodium ion battery or a potassium ion battery including:
   (I) a nonaqueous organic solvent;
   (II) a solute of an ionic salt; and
   (III) at least one selected from the group consisting of an organochlorine compound, a phosphorus compound having a P-Cl bond, a sulfone compound having an S(=O)₂-Cl bond, a sulfine compound having an S(=O)-Cl bond, and a silicon compound having a Si-Cl bond.
[2] The nonaqueous electrolyte solution according to [1], in which a concentration x of the (III) satisfies 0.01 mass% ≤ x ≤ 3.20 mass% in terms of a chlorine atom.
[3] The nonaqueous electrolyte solution according to [1] or [2], in which the organochlorine compound is at least one selected from the group consisting of an aliphatic hydrocarbon compound having a C-Cl bond, an aromatic hydrocarbon compound having a C-Cl bond, a compound represented by the following Formula (1), and a compound represented by the following Formula (2). 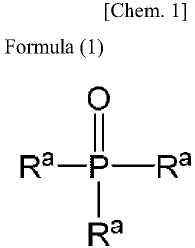
   (R^{a}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{x})₂; the R^{x}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{x}s may be the same as or different from each other; the R^{x}s may bond to each other; at least one of the R^{a}s has a C-Cl bond, and the R^{a}s may be the same as or different from each other; and the R^{a}s may bond to each other.) 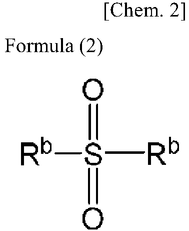
   (R^{b}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{y})₂; the R^{y}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{y}s may be the same as or different from each other; the R^{y}s may bond to each other; at least one of the R^{b}s has a C-Cl bond, and the R^{b}s may be the same as or different from each other; and the R^{b}s may bond to each other.)
[4] The nonaqueous electrolyte solution according to [1] or [2], in which the phosphorus compound having a P-Cl bond includes at least one selected from the group consisting of phosphorus trichloride, phosphorus monofluoride dichloride, phosphorus difluoride monochloride, phosphoryl chloride, phosphoryl monofluoride dichloride, phosphoryl difluoride monochloride, phosphorus pentachloride, phosphorus monofluoride tetrachloride, phosphorus difluoride trichloride, phosphorus trifluoride dichloride, phosphorus tetrafluoride monochloride, hexachloro phosphate, pentachloride monofluorophosphate, tetrachloride difluorophosphate, trichloride trifluorophosphate, dichloride tetrafluorophosphate, monochloride pentafluorophosphate, monochlorophosphate, dichlorophosphate, monochloro monofluorophosphate, a bis(dichlorophosphoryl)imide salt, dichlorophosphoryl isocyanate, monochloro monofluorophosphoryl isocyanate, a compound represented by the following Formula (A), a compound represented by the following Formula (B), and a compound represented by the following Formula (C). 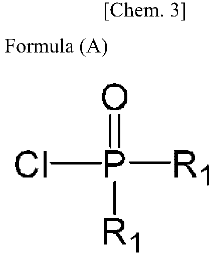
   (R₁s in the formula each independently represent an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent; the R₁s may be the same as or different from each other; and the R₁s may bond to each other.) 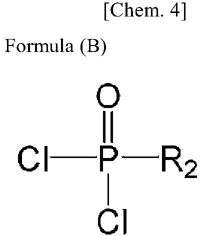
   (R₂ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.) 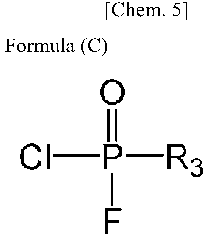
   (R₃ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.)
[5] The nonaqueous electrolyte solution according to [1] or [2], in which the sulfone compound having an S(=O)₂-Cl bond includes at least one selected from the group consisting of sulfuryl chloride, sulfuryl chlorofluoride, chloromethanesulfonyl chloride, methanedisulfonyl dichloride, 1,3-propane disulfonyl dichloride, chlorosulfonyl isocyanate, chlorosulfonic acid, a chlorosulfonate, a bis(chlorosulfonyl)imide salt, a (dichlorophosphoryl)(chlorosulfonyl)imide salt, a (difluorophosphoryl)(chlorosulfonyl)imide salt, and a compound represented by the following Formula (D). 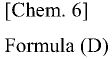 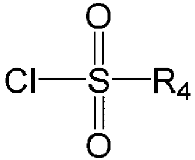 (R₄ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.)
[6] The nonaqueous electrolyte solution according to [1] or [2], in which the sulfine compound having an S(=O)-Cl bond includes at least one selected from the group consisting of sulfinyl chloride, sulfinyl chloride fluoride, methylsulfinyl chloride, ethylsulfinyl chloride, and t-butylsulfinyl chloride.
[7] The nonaqueous electrolyte solution according to [1] or [2], in which the silicon compound having a Si-Cl bond includes at least one selected from the group consisting of trialkylchlorosilane, dialkyldichlorosilane, alkyltrichlorosilane, tetrachlorosilane, dialkylchlorohydrosilane, alkyldichlorohydrosilane, and alkylchlorodihydrosilane.
[8] The nonaqueous electrolyte solution according to any one of [1] to [7], in which the (II) is an ionic salt containing a pair of a cation consisting of sodium, and at least one anion selected from the group consisting of a hexafluorophosphate anion, a difluorophosphate anion, a monofluorophosphate anion, a tetrafluoroborate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.
[9] The nonaqueous electrolyte solution according to any one of [1] to [7], in which the (II) is an ionic salt containing a pair of a cation consisting of potassium, and at least one anion selected from the group consisting of a hexafluorophosphate anion, a difluorophosphate anion, a monofluorophosphate anion, a tetrafluoroborate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.
[10] The nonaqueous electrolyte solution according to any one of [1] to [9], in which the (I) includes at least one selected from the group consisting of a cyclic ester, a chain ester, a cyclic ether, and a chain ether.
[11] The nonaqueous electrolyte solution according to [10], in which a part or all of the cyclic ester is a cyclic carbonate.
[12] The nonaqueous electrolyte solution according to [10], in which a part or all of the chain ester is a chain carbonate.
[13]The nonaqueous electrolyte solution according to any one of [1] to [12], in which the (I) includes at least one selected from the group consisting of ethylene carbonate, propylene carbonate, butylene carbonate, dimethyl carbonate, diethyl carbonate, ethyl methyl carbonate, γ-butyrolactone, methyl acetate, ethyl acetate, methyl propionate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.
[14]The nonaqueous electrolyte solution according to any one of [1] to [13], further including: at least one additive selected from the group consisting of cyclohexylbenzene, t-butyl benzene, t-amyl benzene, fluorobenzene, vinylene carbonate, a vinylene carbonate oligomer having a number average molecular weight of 170 to 5,000, vinyl ethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane.
[15] A nonaqueous sodium ion battery including: at least a positive electrode, a negative electrode, and the nonaqueous electrolyte solution according to any one of [1] to [8] and [10] to [14].
[16] A nonaqueous potassium ion battery including: at least a positive electrode, a negative electrode, and the nonaqueous electrolyte solution according to any one of [1] to [7] and [9] to [14].
[17] A method for producing a nonaqueous sodium ion battery, the method including: preparing the nonaqueous electrolyte solution according to any one of [1] to [8] and [10] to [14]; and filling an empty cell including at least a positive electrode and a negative electrode with the nonaqueous electrolyte solution.
[18] A method for producing a nonaqueous potassium ion battery, including: preparing the nonaqueous electrolyte solution according to any one of [1] to [7] and [9] to [14]; and filling an empty cell including at least a positive electrode and a negative electrode with the nonaqueous electrolyte solution.

### ADVANTAGEOUS EFFECTS OF INVENTION

Embodiments of the present disclosure provide a nonaqueous electrolyte solution capable of achieving at least one of improvement in cycle characteristic at a high temperature of 60°C or higher, prevention or reduction of an increase in resistance, and reduction of gas generation in a nonaqueous sodium ion battery or a nonaqueous potassium ion battery, a nonaqueous sodium ion battery and a nonaqueous potassium ion battery using the same, a method for producing the nonaqueous sodium ion battery, and a method for producing the nonaqueous potassium ion battery.

### DESCRIPTION OF EMBODIMENTS

Configurations and combinations thereof in the following embodiments are merely examples, and additions, omissions, replacements, and other changes of the configurations are possible without departing from the scope of the present disclosure. In addition, the present disclosure is not limited by the embodiments, but only by the scope of claims.

Ranges expressed with "to" in the present specification mean ranges including numerical values indicated before and after "to" as a lower limit value and an upper limit value.

### (Nonaqueous Electrolyte Solution)

A nonaqueous electrolyte solution according to an embodiment of the present disclosure is a nonaqueous electrolyte solution for a sodium ion battery or a potassium ion battery, and includes:
(I) a nonaqueous organic solvent;
(II) a solute of an ionic salt; and
(III) at least one selected from the group consisting of an organochlorine compound, a phosphorus compound having a P-Cl bond, a sulfone compound having an S(=O)₂-Cl bond, a sulfine compound having an S(=O)-Cl bond, and a silicon compound having a Si-Cl bond.

For example, in a nonaqueous lithium ion battery, during initial charging, a fluoride ion generated by decomposition of a fluorine-containing ionic salt such as lithium hexafluorophosphate and lithium tetrafluoroborate contained as solutes reacts with aluminum of positive electrode current collector to form a stable passive film on an aluminum surface. This film contains AlF₃ or an analogous compound as a main component. In the presence of a high concentration of chloride ions, an Al-F bond is replaced with an Al-Cl bond by a reaction with the chloride ions. These bonds are eventually converted into aluminum chloride and lithium tetrachloroaluminate and the resultant compounds are eluted into the electrolyte solution, thereby destroying the passive film. In the case of a nonaqueous lithium ion battery, lithium chloride is generated when the chloride ions are generated by charging. The generated lithium chloride is dissolved in the electrolyte solution for a nonaqueous lithium ion battery, and leads to progress in a destructive reaction of the passive film.

However, in the case of the nonaqueous sodium ion battery or the nonaqueous potassium ion battery, when the chloride ions are generated by the charging, sodium chloride and potassium chloride are generated. These compounds are insoluble in the electrolyte solution for a nonaqueous sodium ion battery and the electrolyte solution for a nonaqueous potassium ion battery, and lead to no progress in a destructive reaction of the passive film of the positive electrode current collector.

Furthermore, quite surprisingly, it has been found that, these compounds result in improvement of a cycle characteristic under a high temperature environment, prevention or reduction of an increase in resistance, and reduction of gas generation in the nonaqueous sodium ion battery and the nonaqueous potassium ion battery using the nonaqueous electrolyte solution of the present disclosure containing a chlorine-containing compound, which generates the chloride ions by the charging, unlike the case of the nonaqueous lithium ion battery. Although details of this mechanism are not clear at present, it can be considered as follows.

Presumably, when the chlorine-containing compound, which generates the chloride ions by the charging, decomposes, a sodium chloride film or potassium chloride film is form on an electrode. Then, an inorganic film caused by these chloride salts would have high ionic conductivity and stability and this would achieve preventing or reducing continuous decomposition due to oxidation and reduction of the nonaqueous electrolyte solution, reducing gas generation, reducing or preventing the increase in resistance, thereby improving a high-temperature cycle characteristic.

Hereinafter, each component contained in the nonaqueous electrolyte solution of the present disclosure will be described in detail.

### [(I) Nonaqueous Organic Solvent]

Examples of the nonaqueous organic solvent to be used in the nonaqueous electrolyte solution of the present disclosure include esters (including carbonates), ethers, lactones, nitriles, imides, and sulfones.

Among them, the nonaqueous organic solvent preferably contains at least one selected from the group consisting of a cyclic ester, a chain ester, a cyclic ether, and a chain ether.

Examples of a cyclic ester include cyclic carbonates such as ethylene carbonate, propylene carbonate, butylene carbonate, and fluoroethylene carbonate, γ-butyrolactone, and γ-valerolactone.

Examples of a chain ester include chain carbonates such as dimethyl carbonate, diethyl carbonate, ethyl methyl carbonate, methyl propyl carbonate, ethyl propyl carbonate, and methyl butyl carbonate, methyl acetate, ethyl acetate, 2,2-difluoroethyl acetate, methyl propionate, ethyl propionate, methyl 2-fluoropropionate, ethyl 2-fluoropropionate, and methyl 3,3,3-trifluoropropionate.

Examples of a cyclic ether include tetrahydrofuran, 2-methyltetrahydrofuran, furan, tetrahydropyran, 1,3-dioxolane, 2-methyl-1,3-dioxolane, 4-methyl-1,3-dioxolane, 1,3-dioxane, and 1,4-dioxane.

Examples of a chain ether include dimethoxyethane, diethoxyethane, diethyl ether, dibutyl ether, diisopropyl ether, ethoxy-methoxy ethane, diethylene glycol dimethyl ether, triethylene glycol dimethyl ether, tetraethylene glycol dimethyl ether, and dipropylene glycol dimethyl ether.

A content of at least one selected from the group consisting of the cyclic ester, the chain ester, the cyclic ether, and the chain ether (when a plurality of compounds are present, a total amount thereof) in the nonaqueous organic solvent is preferably 70% by volume to 100% by volume, and more preferably 80% by volume to 100% by volume with respect to a total amount of the nonaqueous organic solvent.

Preferably, the nonaqueous organic solvent contains the cyclic ester, and a part or all of the cyclic ester is a cyclic carbonate.

Preferably, the nonaqueous organic solvent contains the chain ester, and a part or all of the chain ester is a chain carbonate.

Preferably, the above nonaqueous organic solvent contains at least one selected from the group consisting of a cyclic carbonate and a chain carbonate from a viewpoint of an excellent cycle characteristic at a high temperature. Preferably, the nonaqueous organic solvent contains at least one selected from the group consisting of a cyclic ester and a chain ester from a viewpoint of excellent input and output characteristics at a low temperature.

A content of at least one selected from the group consisting of the cyclic carbonate and the chain carbonate (when a plurality of compounds are present, a total amount thereof) in the nonaqueous organic solvent is preferably 10% by volume to 100% by volume, and more preferably 30% by volume to 100% by volume with respect to the total amount of the nonaqueous organic solvent.

Specific examples of the nonaqueous organic solvent include ethyl methyl carbonate, dimethyl carbonate, diethyl carbonate, methyl propyl carbonate, ethyl propyl carbonate, methyl butyl carbonate, ethylene carbonate, propylene carbonate, butylene carbonate, fluoroethylene carbonate, methyl acetate, ethyl acetate, methyl propionate, ethyl propionate, methyl 2-fluoropropionate, ethyl 2-fluoropropionate, diethyl ether, acetonitrile, propionitrile, tetrahydrofuran, 2-methyltetrahydrofuran, furan, tetrahydropyran, 1,3-dioxane, 1,4-dioxane, dibutyl ether, diisopropyl ether, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, dipropylene glycol dimethyl ether, N,N-dimethylformamide, dimethyl sulfoxide, sulfolane, γ-butyrolactone, and γ-valerolactone. Further, one type of these nonaqueous organic solvents to be used in the present embodiment may be used alone, or two or more types thereof may be mixed and used in any combination and any proportion in accordance with an application.

Among them, the above nonaqueous organic solvent preferably contains at least one selected from the group consisting of ethylene carbonate, propylene carbonate, butylene carbonate, dimethyl carbonate, diethyl carbonate, ethyl methyl carbonate, γ-butyrolactone, methyl acetate, ethyl acetate, methyl propionate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.

The nonaqueous electrolyte solution of the present disclosure may also contain a polymer and may be typically referred to as a polymer solid electrolyte. The polymer solid electrolyte includes one containing the nonaqueous organic solvent as a plasticizer.

A polymer is not limited as long as the polymer is an aprotic polymer capable of dissolving a solute and additives ((III) component and other additives) to be described below. Examples of the polymer include polymers having polyethylene oxide as a main chain or a side chain, homopolymers or copolymers of polyvinylidene fluoride, a methacrylic acid ester polymer, and polyacrylonitrile. When the plasticizer is added to such a polymer, among the nonaqueous organic solvents, an aprotic nonaqueous organic solvent is used.

### [(II) Solute which is Ionic Salt]

Examples of the solute to be used in the nonaqueous electrolyte solution of the present disclosure include an ionic salt containing a pair of a cation consisting of a sodium ion in the case of the sodium ion battery or a potassium ion in the case of the potassium ion battery, and at least one anion selected from the group consisting of a hexafluorophosphate anion, a difluorophosphate anion, a monofluorophosphate anion, a tetrafluoroborate anion, a hexafluoroarsenate anion, a hexafluoroantimonate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(pentafluoroethanesulfonyl)imide anion, a (trifluoromethanesulfonyl)(pentafluoroethanesulfonyl)imide anion, a bis(fluorosulfonyl)imide anion, a (trifluoromethanesulfonyl)(fluorosulfonyl)imide anion, a (pentafluoroethanesulfonyl)(fluorosulfonyl)imide anion, a tris(trifluoromethanesulfonyl)methide anion, a bis(difluorophosphoryl)imide anion, a (difluorophosphoryl)(fluorosulfonyl)imide anion, and a (difluorophosphoryl)(trifluoromethanesulfonyl)imide anion.

The solute is preferably an ionic salt containing a pair of a cation consisting of a sodium ion in the case of the sodium ion battery or a potassium ion in the case of the potassium ion battery, and at least one anion selected from the group consisting of a hexafluorophosphate anion, a difluorophosphate anion, a monofluorophosphate anion, a tetrafluoroborate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

A concentration of each of the solutes is not limited, but the lower limit of the concentration is 0.3 mol/L or more, preferably 0.5 mol/L or more, and more preferably 0.7 mol/L or more, and the upper limit of the concentration is 5.0 mol/L or less, preferably 3.0 mol/L or less, and more preferably 2.0 mol/L or less with respect to a total amount of the nonaqueous electrolyte solution. Setting the concentration of the solute to 0.3 mol/L or more achieves reducing deterioration of the cycle characteristic and the output characteristic of a nonaqueous electrolyte solution battery due to a decrease in ionic conductivity, and setting the concentration of the solute to 5.0 mol/L or less achieves reducing or preventing the decrease in ionic conductivity and reducing the deterioration in cycle characteristic and output characteristic of the nonaqueous electrolyte solution battery, due to an increase in viscosity of the nonaqueous electrolyte solution. Further, these solutes may be used alone or in combination.

When a large amount of the solute is dissolved in the nonaqueous organic solvent at once, a temperature of the nonaqueous electrolyte solution may rise due to heat of dissolution of the solute. When a temperature of a liquid increases significantly, decomposition of the solute and the solvent will proceed, and this may cause coloring and performance deterioration of the nonaqueous electrolyte solution. Therefore, the temperature of the liquid when the solute is dissolved in the nonaqueous organic solvent is not limited, but is preferably -20°C to 50°C, and more preferably 0°C to 40°C.

### [(III) Component]

The (III) component to be used in the nonaqueous electrolyte solution of the present disclosure is at least one selected from the group consisting of the organochlorine compound, the phosphorus compound having a P-Cl bond, the sulfone compound having an S(=O)₂-Cl bond, the sulfine compound having an S(=O)-Cl bond, and the silicon compound having a Si-Cl bond. These compounds are compounds that generate chloride ions by the charging at a potential equal to or higher than a decomposition potential.

### (Organochlorine Compound)

The organochlorine compound is preferably at least one selected from the group consisting of an aliphatic hydrocarbon compound having a C-Cl bond, an aromatic hydrocarbon compound having a C-Cl bond, a compound represented by the following Formula (1), and a compound represented by the following Formula (2).

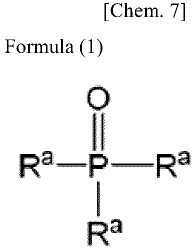

(R^{a}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{x})₂; the R^{x}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{x}s may be the same as or different from each other; the R^{x}s may bond to each other; at least one of the R^{a}s has a C-Cl bond, and the R^{a}s may be the same as or different from each other; and the R^{a}s may bond to each other.)

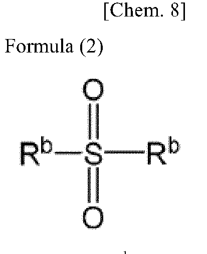

(R^{b}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{y})₂; the R^{y}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{y}s may be the same as or different from each other; the R^{y}s may bond to each other; at least one of the R^{b}s has a C-Cl bond, and the R^{b}s may be the same as or different from each other; and the R^{b}s may bond to each other.)

Examples of the alkyl group having 1 to 10 carbon atoms represented by R^{a} include a methyl group, an ethyl group, an n-propyl group, an isopropyl group, an n-butyl group, a sec-butyl group, a tert-butyl group, an n-pentyl group, and an n-hexyl group. A methyl group, an ethyl group, an n-propyl group, or an isopropyl group is preferred, and the methyl group or the ethyl group is more preferred.

Examples of an alkenyl group having 2 to 10 carbon atoms represented by R^{a} include a vinyl group and an allyl group.

Examples of an alkynyl group having 2 to 10 carbon atoms represented by R^{a} include an ethynyl group and a propargyl group.

Examples of an aryl group having 6 to 15 carbon atoms represented by R^{a} include a phenyl group and a naphthyl group, and a phenyl group is preferred.

Examples of an alkyl group, an alkenyl group, an alkynyl group, and an aryl group in the alkoxy group, the alkenyloxy group, the alkynyloxy group, and the aryloxy group represented by R^{a} respectively include the same groups as in the alkyl group, alkenyl group, the alkynyl group, and the aryl group represented by R^{a}, and preferred examples thereof are also the same.

Examples of a substituent of each group represented by R^{a} include a chlorine atom, a fluorine atom, an ether group, a carbonyl group, and a group formed by combining two or more of these groups.

Examples of the alkyl group having 1 to 10 carbons, the alkenyl group having 2 to 10 carbons, and the alkynyl group having 2 to 10 carbons represented by R^{x} include the groups shown in R^{a}, and preferred examples thereof are also the same.

Examples of a substituent of each group represented by R^{x} include a chlorine atom, a fluorine atom, an ether group, a carbonyl group, and a group formed by combining two or more of these groups.

As described above, at least one of R^{a}s has a C-Cl bond.

Examples of the alkyl group having 1 to 10 carbons, the alkoxy group having 1 to 10 carbons, the alkenyl group having 2 to 10 carbons, the alkenyloxy group having 2 to 10 carbons, the alkynyl group having 2 to 10 carbons, the alkynyloxy group having 2 to 10 carbons, the aryl group having 6 to 15 carbons, and the aryloxy group having 6 to 15 carbons represented by R^{b} include the groups shown in R^{a}, and preferable examples thereof are also the same.

Examples of the substituent of each group represented by R^{b} include a chlorine atom, a fluorine atom, an ether group, a carbonyl group, and a group formed by combining two or more of these groups.

Examples of the alkyl group having 1 to 10 carbons, the alkenyl group having 2 to 10 carbons, and the alkynyl group having 2 to 10 carbons represented by R^{y} include the groups shown in R^{x}, and preferred examples thereof are also the same.

Examples of the substituent of each group represented by R^{y} include a chlorine atom, a fluorine atom, an ether group, a carbonyl group, and a group formed by combining two or more of these groups.

As described above, at least one of R^{b}s has a C-Cl bond.

In addition to chloromethane, dichloromethane, trichloromethane, tetrachloromethane, chloroethane, 1,2-dichloroethane, 1,1,2-trichloroethane, 1,1,2,2-tetrachloroethane, 1,1,1,2-tetrachloroethane, hexachloroethane, chloroethene, 1,2-dichloroethene, trichloroethene, tetrachloroethene, 1-chloropropane, 2-chloropropane, 1,2-dichloropropane, 1,3-dichloropropane, 2,2-dichloropropane, 1,1,2-trichloropropane, 1,1,2,3-tetrachloropropane, 1,2,2,3-tetrachloropropane, allyl chloride, propargylchloride, 1-chlorobutane, 2-chloro-2-methyl-propane, 1-chloropentane, 1-chlorohexane, acetyl chloride, dichloroacetyl chloride, methyl chloroformate, chloromethyl chloroformate, ethyl chloroformate, isopropyl chloroformate, methyl chloroacetate, ethyl chloroacetate, chloromethyl methyl ether, dichloromethyl methyl ether, 2-chloroethyl chloromethyl ether, chloromethyl ethyl ether, 3-chloropropyl methyl ether, 2,3-dichlorotetrahydrofuran, chloroethylene carbonate, 4,5-dichloroethylene carbonate, bis(trichloromethyl) carbonate, hexachloro-2-propanone, oxalyl chloride, chlorocyclopentane, chlorocyclohexane, chlorobenzene, and chlorotoluene, specific examples thereof include chloromethylphosphonic difluoride, chloromethylphosphonic dimethyl, and chloromethylphosphonic diethyl as the compound represented by Formula (1), and chloromethylsulfonic fluoride, 2-chloroethanesulfonic fluoride, chloromethylsulfonic methyl, chloromethylsulfonic ethyl, and chloromethyl fluorosulfonate as the compound represented by Formula (2).

Among them, dichloromethane, trichloromethane, 1,1,2-trichloroethane, 1,1,2,2-tetrachloroethane, 1,1,1,2-tetrachloroethane, trichloroethene, tetrachloroethene, acetyl chloride, dichloroacetyl chloride, bis(trichloromethyl) carbonate, hexachloro-2-propanone, oxalyl chloride, chloromethylphosphonic difluoride, chloromethylphosphonic dimethyl, chloromethylsulfonic fluoride, 2-chloroethanesulfonic fluoride, chloromethylsulfonic methyl, and chloromethyl fluorosulfonate are preferred.

### (Phosphorus Compound Having P-Cl Bond)

The phosphorus compound having a P-Cl bond include at least one compound selected from the group consisting of phosphorus trichloride, phosphorus monofluoride dichloride, phosphorus difluoride monochloride, phosphoryl chloride, phosphoryl monofluoride dichloride, phosphoryl difluoride monochloride, phosphorus pentachloride, phosphorus monofluoride tetrachloride, phosphorus difluoride trichloride, phosphorus trifluoride dichloride, phosphorus tetrafluoride monochloride, hexachloro phosphate, pentachloride monofluorophosphate, tetrachloride difluorophosphate, trichloride trifluorophosphate, dichloride tetrafluorophosphate, monochloride pentafluorophosphate, monochlorophosphate, dichlorophosphate, monochloro monofluorophosphate, a bis(dichlorophosphoryl)imide salt, dichlorophosphoryl isocyanate, monochloro monofluorophosphoryl isocyanate, a compound represented by the following Formula (A), a compound represented by the following Formula (B), and a compound represented by the following Formula (C).

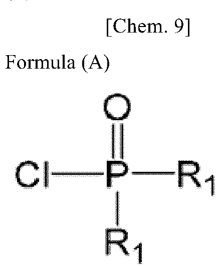

(R₁s in the formula each independently represent an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent; the R₁s may be the same as or different from each other; and the R₁s may bond to each other.)

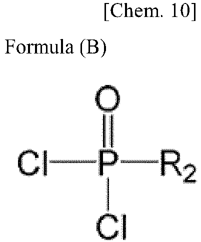

(R₂ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.)

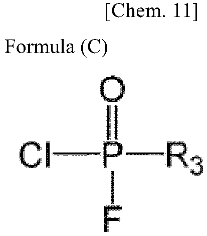

(R₃ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.)

Examples of the alkyl group having 1 to 10 carbon atoms represented by each of R₁ to R₃ include a methyl group, an ethyl group, an n-propyl group, an isopropyl group, an n-butyl group, a sec-butyl group, a tert-butyl group, an n-pentyl group, and an n-hexyl group. A methyl group, an ethyl group, an n-propyl group, or an isopropyl group is preferred, and the methyl group or the ethyl group is more preferred.

Examples of the alkenyl group having 2 to 10 carbon atoms represented by each of R₁ to R₃ include a vinyl group and an allyl group.

Examples of the alkynyl group having 2 to 10 carbon atoms represented by each of R₁ to R₃ include an ethynyl group and a propargyl group.

Examples of the aryl group having 6 to 15 carbon atoms represented by each of R₁ to R₃ include a phenyl group and a naphthyl group, and a phenyl group is preferred.

Examples of an alkyl group, an alkenyl group, an alkynyl group, and an aryl group in the alkoxy group, the alkenyloxy group, the alkynyloxy group, and the aryloxy group represented by each of R₁ to R₃ respectively include the same groups as the alkyl group, the alkenyl group, the alkynyl group, and the aryl group represented by each of R₁ to R₃, and preferred examples thereof are also the same.

Examples of the substituent of the group represented by each of R₁ to R₃ include a chlorine atom, a fluorine atom, an ether group, a carbonyl group, and a group formed by combining two or more of these groups.

In addition to phosphorus trichloride, phosphorus monofluoride dichloride, phosphorus difluoride monochloride, phosphoryl chloride, phosphoryl monofluoride dichloride, phosphoryl difluoride monochloride, phosphorus pentachloride, phosphorus monofluoride tetrachloride, phosphorus difluoride trichloride, phosphorus trifluoride dichloride, phosphorus tetrafluoride monochloride, hexachloro phosphate, pentachloride monofluorophosphate, tetrachloride difluorophosphate, trichloride trifluorophosphate, dichloride tetrafluorophosphate, monochloride pentafluorophosphate, monochlorophosphate, dichlorophosphate, monochloro monofluorophosphate, a bis(dichlorophosphoryl)imide salt, dichlorophosphoryl isocyanate, monochloro monofluorophosphoryl isocyanate, specific examples of the phosphorus compound having a P-Cl bond include dimethyl chlorophosphate, diethyl chlorophosphate, diisopropyl chlorophosphate, diphenyl chlorophosphate, bis(2,2,2-trichloroethyl) chlorophosphate, and 2-chloro-2-oxo-1,3,2-dioxaphospholane as the compound represented by Formula (A), methylphosphonic dichloride, chloromethylphosphonic dichloride, ethylphosphonic dichloride, methyl dichlorophosphate, ethyl dichlorophosphate, 2-chloroethyl dichlorophosphate, phenyl dichlorophosphate, 2-chlorophenyl phosphorodichloridate, and 4-chlorophenyl phosphorodichloridate as the compound represented by Formula (B), and methyl chlorofluorophosphate, ethyl chlorofluorophosphate, and phenyl chlorofluorophosphate as the compound represented by Formula (C).

Among them, phosphoryl chloride, phosphoryl monofluoride dichloride, dichlorophosphate, monochloro monofluorophosphate, a bis(dichlorophosphoryl)imide salt, dichlorophosphoryl isocyanate, and methyl dichlorophosphate are preferable.

### (Sulfone Compound Having S(=O)₂-Cl bond)

Examples of the sulfone compound having an S(=O)₂-Cl bond include at least one selected from the group consisting of sulfuryl chloride, sulfuryl chlorofluoride, chloromethanesulfonyl chloride, methanedisulfonyl dichloride, 1,3-propane disulfonyl dichloride, chlorosulfonyl isocyanate, chlorosulfonic acid, a chlorosulfonate, a bis(chlorosulfonyl)imide salt, a (dichlorophosphoryl)(chlorosulfonyl)imide salt, a (difluorophosphoryl)(chlorosulfonyl)imide salt, and a compound represented by the following Formula (D).

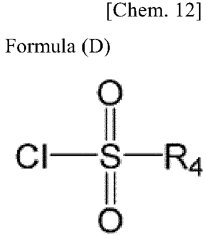

(R₄ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, and an aryloxy group having 6 to 15 carbon atoms and optionally having a substituent.)

Examples of the alkyl group having 1 to 10 carbons, the alkoxy group having 1 to 10 carbons, the alkenyl group having 2 to 10 carbons, the alkenyloxy group having 2 to 10 carbons, the alkynyl group having 2 to 10 carbons, the alkynyloxy group having 2 to 10 carbons, the aryl group having 6 to 15 carbons, and the aryloxy group having 6 to 15 carbons represented by R₄ include the groups shown in in R₁ to R₃, and preferable examples thereof are also the same.

Examples of the substituent of each group represented by R₄ include a chlorine atom, a fluorine atom, an alkyl group (preferably an alkyl group having 1 to 3 carbon atoms), a chlorosulfonyl group, an ether group, a carbonyl group, and a group formed by combining two or more of these groups.

In addition to sulfuryl chloride, sulfuryl chlorofluoride, chlorosulfonyl isocyanate, chlorosulfonic acid, a chlorosulfonate, a bis(chlorosulfonyl)imide salt, a (dichlorophosphoryl)(chlorosulfonyl)imide salt, a (difluorophosphoryl)(chlorosulfonyl)imide salt, methanedisulfonyl dichloride, and 1,3-propane disulfonyl dichloride, specific examples of the sulfone compound having an S(=O)₂-Cl bond include methanesulfonyl chloride, chloromethanesulfonyl chloride, ethanesulfonyl chloride, 2-chloroethanesulfonyl chloride, 1-propanesulfonyl chloride, 1-pentylsulfonyl chloride, 2-propenesulfonyl chloride, 3-chloropropanesulfonyl chloride, trifluoromethanesulfonyl chloride, trichloromethanesulfonyl chloride, chloromethyl chlorosulfonate, benzenesulphonyl chloride, benzene-1,3-disulfonyl chloride, and p-toluenesulphonyl chloride as the compound represented by Formula (D).

Among them, methanesulfonyl chloride, trifluoromethanesulfonyl chloride, trichloromethanesulfonyl chloride, sulfuryl chloride, sulfuryl chlorofluoride, a chlorosulfonate, chloromethyl chlorosulfonate, a bis(chlorosulfonyl)imide salt, a (dichlorophosphoryl)(chlorosulfonyl)imide salt, methanedisulfonyl dichloride, and 1,3-propane disulfonyl dichloride are preferable.

There is no particular limitation on types of counter cations of a salt of the phosphorus compound having a P-Cl bond and a salt of the sulfone compound having an S(=O)₂-Cl bond, and various counter cations can be selected as long as performance of the nonaqueous electrolyte solution, the nonaqueous sodium ion battery, and the nonaqueous potassium ion battery according to the present embodiment is not impaired.

Specific examples thereof include metal cations such as a lithium ion, a sodium ion, a potassium ion, a rubidium ion, a cesium ion, a magnesium ion, a calcium ion, a barium ion, a silver ion, a copper ion, and an iron ion; and onium cations such as a tetraalkylammonium ion, a tetraalkylphosphonium ion, an imidazolium ion, and an ammonium ion having a spiro skeleton.

In the case of the nonaqueous sodium ion battery, particularly from the viewpoint of supporting the ionic conductivity in the nonaqueous sodium ion battery, a lithium ion, a sodium ion, a potassium ion, a tetraalkylammonium ion, or a tetraalkylphosphonium ion is preferable, and the lithium ion, the sodium ion, the tetraalkylammonium ion, or the ammonium ion having a spiro skeleton is more preferable.

In the case of the nonaqueous potassium ion battery, particularly from the viewpoint of supporting the ionic conductivity in the nonaqueous potassium ion battery, a lithium ion, a sodium ion, a potassium ion, a tetraalkylammonium ion, or a tetraalkylphosphonium ion is preferable, and the potassium ion, the tetraalkylammonium ion, or the ammonium ion having a spiro skeleton is more preferable.

An alkyl group in the tetraalkylammonium ion preferably has 1 to 6 carbon atoms, and an alkyl group in the tetraalkylphosphonium ion preferably has 1 to 6 carbon atoms.

Four alkyl groups in the tetraalkylammonium ion may be the same or different from one another, and four alkyl groups in the tetraalkylphosphonium ion may be the same or different from one another.

The ammonium ion having a spiro skeleton is preferably, for example, 5-azoniaspiro[4.4]nonane.

### (Sulfine Compound Having S(=O)-Cl bond)

Examples of the sulfine compound having an S(=O)-Cl bond include at least one compound selected from the group consisting of sulfinyl chloride, sulfinyl chloride fluoride, methylsulfinyl chloride, ethylsulfinyl chloride, and t-butylsulfinyl chloride.

Among them, sulfinyl chloride, methylsulfinyl chloride, ethylsulfinyl chloride, and t-butylsulfinyl chloride are preferable.

### (Silicon Compound Having Si-Cl Bond)

Examples of the silicon compound having a Si-Cl bond include at least one selected from the group consisting of trialkylchlorosilane, dialkyldichlorosilane, alkyltrichlorosilane, tetrachlorosilane, dialkylchlorohydrosilane, alkyldichlorohydrosilane, and alkylchlorodihydrosilane.

The alkyl group optionally included in the silicon compound having a Si-Cl bond is preferably an alkyl group having 1 to 10 carbon atoms and optionally having a substituent. When the alkyl group has the substituent, examples of the substituent include a chlorine atom, a fluorine atom, an ether group, a carbonyl group, and a group formed by combining two or more of these groups.

The alkyl group optionally included in the silicon compound having a Si-Cl bond is preferably a methyl group or an ethyl group, and more preferably a methyl group.

Among these, the silicon compound having a Si-Cl bond is preferably trimethylchlorosilane, dimethyldichlorosilane, or methyltrichlorosilane.

In order to obtain the nonaqueous electrolyte solution containing the (III) component, the (III) component may be added as a raw material, or indirectly added by using a fluorine-containing imide salt, a fluorine-containing sulfonate, a fluorine-containing phosphate, or a solute in which the (III) component remains (the (III) component contained in the manufacturing process is not completely removed by purification).

In the nonaqueous electrolyte solution in the present embodiment, a concentration x of the (III) satisfies preferably 0.005 mass% ≤ x ≤ 10.00 mass%, and more preferably 0.01 mass% ≤ x ≤ 3.20 mass% in terms of chlorine atoms, with respect to the total amount of the nonaqueous electrolyte solution. Setting the concentration x to 0.005 mass% or more achieves easily providing an effect of improving respective characteristics of the nonaqueous sodium ion battery and the nonaqueous potassium ion battery. On the other hand, setting the concentration x to 10.00 mass% or less allows for reducing or preventing excessive supply of an decomposition product to an electrode surface and a decrease in ionic conductivity of the electrolyte solution for a nonaqueous sodium ion battery and the electrolyte solution for a nonaqueous potassium ion battery, and achieves providing an effect of reducing or preventing the increase in resistance and an effect of improving the cycle characteristic.

The concentration x of the (III) more preferably satisfies 0.05 mass% ≤ x ≤ 1.20 mass% in terms of chlorine atoms.

The concentration x of the (III) is calculated based on a content of the chlorine atoms in the nonaqueous electrolyte solution. In the present disclosure, an amount of the chlorine atoms contained in the nonaqueous electrolyte solution is a value quantitatively determined as the chloride ions by the following method. A sample is completely decomposed by a flask combustion method to obtain an absorption liquid, and a silver nitrate aqueous solution is added to the absorption liquid to produce and precipitate silver chloride. The resultant product is filtrated to collect a solid sample. The solid sample is measured using an X-ray fluorescence analyzer. As the X-ray fluorescence analyzer, for example, ZSX Primus IV manufactured by Rigaku Corporation can be used. Fluoride ions interfere with the quantitative determination of the chloride ions. Thus, when the measured value of the chloride ions is expected to be 50 ppm by mass or less, it is necessary to perform the measurement after adding boric acid or a borate to the absorption liquid obtained by the flask combustion method to reduce the fluoride ions.

### [Other Additives]

An additive component to be commonly used in the nonaqueous electrolyte solution according to the present disclosure may be further added in any proportion as long as the gist of the present disclosure is not impaired. Specific examples of another additive include compounds that have an overcharge prevention effect, a negative electrode film-forming effect, and a positive electrode protective effect, such as cyclohexylbenzene, cyclohexylfluorobenzene, biphenyl, difluoroanisole, t-butyl benzene, t-amyl benzene, fluorobenzene, 2-fluorotoluene, 2-fluorobiphenyl, vinylene carbonate, a vinylene carbonate oligomer having a number average molecular weight of 170 to 5,000, dimethylvinylene carbonate, vinyl ethylene carbonate, fluoroethylene carbonate, 1,6-diisocyanatohexane, ethynylethylene carbonate, trans-difluoroethylene carbonate, maleic anhydride, succinic anhydride, 1,3-propane sultone, 1,3-propene sultone, 1,4-butane sultone, 1,3,2-dioxathiolane-2,2-dioxide, 4-propyl-1,3,2-dioxathiolane-2,2-dioxide, methylene methanedisulfonate, dimethylene methanedisulfonate, trimethylene methanedisulfonate, ethylene sulfate, methyl methanesulphonate, lithium difluorobis(oxalato)phosphate, sodium difluorobis(oxalato)phosphate, potassium difluorobis(oxalato)phosphate, lithium difluorooxalatoborate, sodium difluorooxalatoborate, potassium difluorooxalatoborate, lithium tetrafluorooxalatophosphate, sodium tetrafluorooxalatophosphate, potassium tetrafluorooxalatophosphate, lithium tris(oxalato)phosphate, hexafluoroisopropanol, trifluoroethanol, di(hexafluoroisopropyl)carbonate, di(trifluoroethyl) carbonate, 1,2-ethanedisulfonic anhydride, tris(trimethylsilyl)borate, succinonitrile, adiponitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane. As in the case of the nonaqueous electrolyte solution battery referred to as a polymer battery, the nonaqueous electrolyte solution can be pseudo-solidified with a gelling agent or a crosslinked polymer and used. A fluorinated alcohol such as hexafluoroisopropanol has low nucleophilicity, and thus, does not react with a solute such as a hexafluorophosphate to generate hydrogen fluoride. The fluorinated alcohol is used, for example, as an additive to improve input and output characteristics.

Among them, the other additive is preferably at least one selected from the group consisting of cyclohexylbenzene, t-butyl benzene, t-amyl benzene, fluorobenzene, vinylene carbonate, a vinylene carbonate oligomer having a number average molecular weight of 170 to 5,000, vinyl ethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane.

When the nonaqueous electrolyte solution according to the present embodiment contains the other additive, a content thereof is preferably 0.01 mass% or more and 3.0 mass% or less with respect to the total amount of the nonaqueous electrolyte solution.

### [Nonaqueous Electrolyte Solution Battery]

The nonaqueous electrolyte solution battery according to the present disclosure is the nonaqueous sodium ion battery or the nonaqueous potassium ion battery.

The nonaqueous sodium ion battery according to an embodiment of the present disclosure includes at least a positive electrode, a negative electrode, and the nonaqueous electrolyte solution.

The nonaqueous potassium ion battery according to an embodiment of the present disclosure includes at least a positive electrode, a negative electrode, and the nonaqueous electrolyte solution.

More specifically, the nonaqueous electrolyte solution battery according to the present disclosure includes the positive electrode, the negative electrode made of sodium or a negative electrode material capable of occluding and discharging sodium, the nonaqueous electrolyte solution, a current collector, a separator, a container, and the like. Alternatively, the nonaqueous electrolyte solution battery according to the present disclosure includes the positive electrode, the negative electrode made of potassium or a negative electrode material capable of occluding and discharging potassium, the nonaqueous electrolyte solution, a current collector, a separator, a container, and the like.

### [Positive Electrode]

The positive electrode includes a positive electrode active material, an aluminum foil as a current collector, a conductive material, and a binder. A type of the positive electrode active material is not limited, but a material in which sodium ions or potassium ions can be reversibly intercalated and deintercalated is used. As a material of the aluminum foil, pure aluminum 1000 series having high aluminum purity (for example, A1085 or A1N30), aluminum manganese alloy 3000 series to which manganese is added for a purpose of increasing strength (for example, A3003), or the like is typically used. Further, aluminum-magnesium alloys 5000 series to which magnesium is added for a purpose of increasing strength, and 8000 series (alloys that do not fall under 1000 to 7000 series) to which iron is added are also often used. Furthermore, the aluminum foil typically has a thickness of several µm to several tens of µm.

For example, when the cation is sodium, examples of the positive electrode material (positive electrode active material) include but not limited to sodium-containing transition metal composite oxides such as NaCrO₂, NaFe_{0.5}Co_{0.5}O₂, NaFe_{0.4}Mn_{0.3}Ni_{0.3}O₂, NaNi_{0.5}Ti_{0.3}Mn_{0.2}O₂, NaNi_{1/3}Ti_{1/3}Mn_{1/3}O₂, NaNi_{0.33}Ti_{0.33}Mn_{0.16}Mg_{0.17}O₂, Na_{2/3}Ni_{1/3}Ti_{1/6}Mn_{1/2}O₂, and Na_{2/3}Ni_{1/3}Mn_{2/3}O₂, these sodium-containing transition metal composite oxides in which a plurality of transition metals such as Co, Mn, and Ni are mixed, sodium-containing transition metal composite oxides in which a part of the transition metals of these sodium-containing transition metal composite oxides is replaced with other metals other than the transition metals, polyanion type compounds such as NaFePO₄, NaVPO₄F, Na₃V₂(PO₄)₃, and Na₂Fe₂(SO₄)₃, sodium salts of a Prussian Blue analogues represented by a composition formula NaₐM_{b}[Fe(CN)₆]_{c} (M = Cr, Mn, Fe, Co, Ni, Cu, or Zn, 0 ≤ a ≤ 2, 0.5 ≤ b ≤ 1.5, 0.5 ≤ c ≤ 1.5), oxides such as TiO₂, V₂O₅, and MoO₃, sulfides such as TiS₂ and FeS, conductive polymers such as polyacetylene, polyparaphenylene, polyaniline, and polypyrrole, activated carbon, radical-generating polymers, and carbon materials. One type of these positive electrode active materials may be used alone, or two or more types thereof may be used in combination.

When the cation is potassium, examples of the positive electrode material (positive electrode active material) include but not limited to polyanion type compounds such as KFePO₄, KVOPO₄, KFeSO₄F, KVPO₄F, and K₃V₂(PO₄)₃, potassium salts of a Prussian Blue analogues represented by a composition formula KₐM_{b}[Fe(CN)₆]_{c} (M = Cr, Mn, Fe, Co, Ni, Cu, or Zn, 0 ≤ a ≤ 2, 0.5 ≤ b ≤ 1.5, 0.5 ≤ c ≤ 1.5), potassium-containing transition metal composite oxides such as KCrO₂, K_{0.3}MnO₂, K_{0.7}Fe_{0.5}Mn_{0.5}O₂, K_{2/3}Ni_{1/2}Mg_{1/6}Te_{1/3}O₂, conductive polymers such as polyacetylene, polymethyl methacrylate, polyparaphenylene, polyaniline, and polypyrrole, anhydrous perylene, activated carbon, radical-generating polymers, and carbon materials. One type of these positive electrode active materials may be used alone, or two or more types thereof may be used in combination.

In the positive electrode, for example, a positive electrode active material layer is formed on at least one surface of a positive electrode current collector. The positive electrode active material layer includes, for example, the positive electrode active material described above, a binder, and, if necessary, an electrically conductive agent. Examples of the binder include polytetrafluoroethylene, polyvinylidene fluoride, and a styrene-butadiene rubber (SBR) resin. As the electrically conductive agent, for example, carbon materials such as acetylene black, Ketjen black, carbon fiber, or graphite (granular graphite or flake graphite) can be used, and acetylene black or Ketjen black having low crystallinity is preferably used. One type of these binders and one type of these electrically conductive agents may be used respectively, or two or more types of binders and two or more types of electrically conductive agents may be used in combination respectively.

### [Negative Electrode]

The negative electrode includes a negative electrode active material, a current collector, a conductive material, and a binder. A type of the negative electrode active material is not limited, but a material in which sodium ions or potassium ions can be reversibly intercalated and deintercalated is used.

When the cation is sodium, the negative electrode active material is not limited, but examples thereof include sodium metal and materials capable of occluding and discharging the sodium ions. For example, sodium metal, an alloy of sodium metal and other metals such as tin, an intermetallic compound, various carbon materials such as hard carbon, a metal oxide such as titanium oxide, a metal nitride, (elemental) tin, a tin compound, activated carbon, a conductive polymer, and the like are used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like are used. One type of these negative electrode active materials may be used alone, or two or more types thereof may be used in combination.

When the cation is potassium, the negative electrode active material is not limited, but examples thereof include potassium metal and materials capable of occluding and discharging the potassium ions. For example, potassium metal, an alloy of potassium metal and other metals such as tin and bismuth, an intermetallic compound, (elemental) phosphorus such as red phosphorus and black phosphorus, various carbon materials, and metal oxides such as titanium oxide are used. Examples of the above carbon material include graphitizable carbon, non-graphitizable carbon (also referred to as hard carbon) having an interplanar spacing of (002) planes of 0.37 nm or more, and graphite having an interplanar spacing of (002) planes of 0.37 nm or less. As the graphite, artificial graphite, natural graphite, and the like are used. One type of these negative electrode active materials may be used alone, or two or more types thereof may be used in combination.

In the negative electrode, for example, a negative electrode active material layer is formed on at least one surface of a negative electrode current collector. The negative electrode active material layer includes, for example, the negative electrode active material described above, a binder, and, if necessary, an electrically conductive agent. Examples of the binder include polytetrafluoroethylene, polyvinylidene fluoride, and a styrene-butadiene rubber (SBR) resin. As the electrically conductive agent, for example, carbon materials such as acetylene black, Ketjen black, carbon fiber, or graphite (granular graphite or flake graphite) can be used. One type of these binders and one type of these electrically conductive agents may be used respectively, or two or more types of binders and two or more types of electrically conductive agents may be used in combination respectively.

### [Current Collector]

For the current collectors of the positive electrode and the negative electrode, copper, aluminum, stainless steel, nickel, titanium, alloys thereof, or the like can be used. An active material layer is formed on at least one surface of the current collector.

### [Separator]

As the separator for preventing contact between the positive electrode and the negative electrode, a nonwoven fabric, a porous sheet, or a film made of polyolefin (for example, polypropylene and polyethylene), paper, glass fiber, or the like is used. These are preferably microporous so that the electrolyte solution permeates and ions easily permeate.

### [Exterior Body]

As the exterior body, for example, a metal can having a coin shape, a cylindrical shape, a square shape, or the like, or a laminated exterior body can be used. Metal can materials include, for example, nickel-plated steel plates, stainless steel plates, nickel-plated stainless steel plates, aluminum or alloys thereof, nickel, and titanium. As the laminated exterior body, for example, an aluminum laminated film, a SUS laminated film, a silica-coated polypropylene or polyethylene laminated film, or the like can be used.

### [Method for Producing Nonaqueous Electrolyte Solution Battery]

The present disclosure also relates to a method for producing a nonaqueous sodium ion battery, and the method includes: preparing the nonaqueous electrolyte solution; and filling an empty cell including at least a positive electrode and a negative electrode with the nonaqueous electrolyte solution.

The present disclosure also relates to a method for producing a nonaqueous potassium ion battery, and the method includes: preparing the nonaqueous electrolyte solution; and filling an empty cell including at least a positive electrode and a negative electrode with the nonaqueous electrolyte solution.

### EXAMPLES

Hereinafter, the present disclosure will be specifically described with reference to examples, but the present disclosure is not limited to these examples.

### <Preparation of Electrolyte Solution for Nonaqueous Sodium Ion Battery>

### [Preparation of Electrolyte Solution Containing Additive Having C-Cl Bond]

### (Preparation of Electrolyte Solution No. 1 to Electrolyte Solution No. 57)

As the nonaqueous solvent, a mixed solvent of propylene carbonate (hereinafter also referred to as "PC") and diethyl carbonate (hereinafter also referred to as "DEC") in a volume ratio of 1:1 was used, NaPF₆ as a sodium salt of the solute and an additive having a C-Cl bond were dissolved in the solvent at concentrations shown in Tables 1 and 2, thereby preparing an electrolyte solution No. 1 to an electrolyte solution No. 56. Further, an electrolyte solution No. 57 was prepared in the same manner as the method for preparing the electrolyte solution No. 1 except that the additive having a C-Cl bond was not used. The above preparation was performed with the liquid temperature maintained at 20°C to 30°C.

### [Table 1]

**Table 1**

| Composition of Electrolyte Solution | | | | | |
|---|---|---|---|---|---|
| Electrolyte Solution No. | Nonaqueous solvent | Solute | | Chlorine-containing compound having C-Cl bond | |
| | | Type | Concentration [mol/L] | Type | Concentration expressed in terms of chlorine atom [mass%] |
| Electrolyte Solution No. 1 | | | | Dichloromethane | 0.02 |
| Electrolyte Solution No. 2 | | | | | 0.06 |
| Electrolyte Solution No. 3 | | | | | 0.50 |
| Electrolyte Solution No. 4 | | | | | 1.00 |
| Electrolyte Solution No. 5 | | | | | 3.00 |
| Electrolyte Solution No. 6 | | | | | 5.00 |
| Electrolyte Solution No. 7 | | | | 1,1,2,2-tetrachloroethane | 0.02 |
| Electrolyte Solution No. 8 | | | | | 0.06 |
| Electrolyte Solution No. 9 | | | | | 0.50 |
| Electrolyte Solution No. 10 | | | | | 1.00 |
| Electrolyte Solution No. 11 | | | | | 3.00 |
| Electrolyte Solution No. 12 | | | | | 5.00 |
| Electrolyte Solution No. 13 | | | | Bis(trichloromethyl) carbonate | 0.02 |
| Electrolyte Solution No. 14 | | | | | 0.06 |
| Electrolyte Solution No. 15 | PC:DEC = 1:1 (volume ratio) | NaPF₆ | 1.0 | | 0.50 |
| Electrolyte Solution No. 16 | | | | | 1.00 |
| Electrolyte Solution No. 17 | | | | | 3.00 |
| Electrolyte Solution No. 18 | | | | | 5.00 |
| Electrolyte Solution No. 19 | | | | Chloromethane | 1.00 |
| Electrolyte Solution No. 20 | | | | Trichloromethane | 1.00 |
| Electrolyte Solution No. 21 | | | | Tetrachloromethane | 1.00 |
| Electrolyte Solution No. 22 | | | | Chloroethane | 1.00 |
| Electrolyte Solution No. 23 | | | | 1,2-dichloroethane | 1.00 |
| Electrolyte Solution No. 24 | | | | 1,1,2-trichloroethane | 1.00 |
| Electrolyte Solution No. 25 | | | | Chloromethyl fluorosulfonate | 1.00 |
| Electrolyte Solution No. 26 | | | | Hexachloroethane | 1.00 |
| Electrolyte Solution No. 27 | | | | Chloroethene | 1.00 |
| Electrolyte Solution No. 28 | | | | 1,2-dichloroethene | 1.00 |
| Electrolyte Solution No. 29 | | | | Trichloroethene | 1.00 |
| Electrolyte Solution No. 30 | | | | Tetrachloroethene | 1.00 |

### [Table 2]

**Table 2**

| Composition of Electrolyte Solution | | | | | |
|---|---|---|---|---|---|
| Electrolyte Solution No. | Nonaqueous solvent | Solute | | Chlorine-containing compound having C-Clbond | |
| | | Type | Concentration [mol/L] | Type | Concentration expressed in terms of chlorine atom [mass%] |
| Electrolyte Solution No. 31 | | | | Chloromethylsulfonic fluoride | 1.00 |
| Electrolyte Solution No. 32 | | | | 2-chloroethanesulfonic fluoride | 1.00 |
| Electrolyte Solution No. 33 | | | | Allyl chloride | 1.00 |
| Electrolyte Solution No. 34 | | | | Propargylchloride | 1.00 |
| Electrolyte Solution No. 35 | | | | Chloromethylphosphonic difluoride | 1.00 |
| Electrolyte Solution No. 36 | | | | Chloromethylphosphonic dimethyl | 1.00 |
| Electrolyte Solution No. 37 | | | | 1-chlorohexane | 1.00 |
| Electrolyte Solution No. 38 | | | | Acetyl chloride | 1.00 |
| Electrolyte Solution No. 39 | | | | Dichloroacetyl chloride | 1.00 |
| Electrolyte Solution No. 40 | | | | Methyl chloroformate | 1.00 |
| Electrolyte Solution No. 41 | | | | Chloromethyl chloroformate | 1.00 |
| Electrolyte Solution No. 42 | | | | Ethyl chloroformate | 1.00 |
| Electrolyte Solution No. 43 | PC:DEC = 1:1 (volume ratio) | NaPF₆ | 1.0 | Methyl chloroacetate | 1.00 |
| Electrolyte Solution No. 44 | | | | Ethyl chloroacetate | 1.00 |
| Electrolyte Solution No. 45 | | | | Chloromethyl methyl ether | 1.00 |
| Electrolyte Solution No. 46 | | | | Chloromethyl ethyl ether | 1.00 |
| Electrolyte Solution No. 47 | | | | 3-chloropropyl methyl ether | 1.00 |
| Electrolyte Solution No. 48 | | | | 2,3-dichlorotetrahydrofuran | 1.00 |
| Electrolyte Solution No. 49 | | | | Chloroethylene carbonate | 1.00 |
| Electrolyte Solution No. 50 | | | | 4,5-dichloroethylene carbonate | 1.00 |
| Electrolyte Solution No. 51 | | | | Hexachloro-2-propanone | 1.00 |
| Electrolyte Solution No. 52 | | | | Oxalyl chloride | 1.00 |
| Electrolyte Solution No. 53 | | | | Chlorocyclopentane | 1.00 |
| Electrolyte Solution No. 54 | | | | Chlorocyclohexane | 1.00 |
| Electrolyte Solution No. 55 | | | | Chlorobenzene | 1.00 |
| Electrolyte Solution No. 56 | | | | Chlorotoluene | 1.00 |
| Electrolyte Solution No. 57 | | | | | |

### [Preparation of Electrolyte Solution Containing Additive Having P-Cl Bond]

### (Preparation of Electrolyte Solution No. 58 to Electrolyte Solution No. 100)

An electrolyte solution No. 58 to an electrolyte solution No. 99 were prepared in the same manner as the method for preparing the electrolyte solution No. 1, except that PC was used as the nonaqueous solvent, and an additive having a P-Cl bond was dissolved at concentrations shown in Tables 3 and 4 instead of the additive having a C-Cl bond. Further, an electrolyte solution No. 100 was prepared in the same manner as the method for preparing the electrolyte solution No. 58 except that the additive having a P-Cl bond was not used.

### [Table 3]

**Table 3**

| Composition of Electrolyte Solution | | | | | |
|---|---|---|---|---|---|
| Electrolyte Solution No. | Nonaqueous solvent | Solute | | Chlorine-containing compound having P-Cl bond | |
| | | Type | Concentration [mol/L] | Type | Concentration expressed in terms of chlorine atom [mass%] |
| Electrolyte Solution No. 58 | | | | Phosphoryl chloride | 0.02 |
| Electrolyte Solution No. 59 | | | | | 0 . 06 |
| Electrolyte Solution No. 60 | | | | | 0.50 |
| Electrolyte Solution No. 61 | | | | | 1.00 |
| Electrolyte Solution No. 62 | | | | | 3.00 |
| Electrolyte Solution No. 63 | | | | | 5.00 |
| Electrolyte Solution No. 64 | | | | Sodium bis(dichlorophosphoryl)imide | 0.02 |
| Electrolyte Solution No. 65 | | | | | 0 . 06 |
| Electrolyte Solution No. 66 | | | | | 0.50 |
| Electrolyte Solution No. 67 | | | | | 1.00 |
| Electrolyte Solution No. 68 | | | | | 3.00 |
| Electrolyte Solution No. 69 | PC | NaPF₆ | 1.0 | | 5.00 |
| Electrolyte Solution No. 70 | | | | Dichlorophosphoryl isocyanate | 0.02 |
| Electrolyte Solution No. 71 | | | | | 0.06 |
| Electrolyte Solution No. 72 | | | | | 0.50 |
| Electrolyte Solution No. 73 | | | | | 1.00 |
| Electrolyte Solution No. 74 | | | | | 3.00 |
| Electrolyte Solution No. 75 | | | | | 5.00 |
| Electrolyte Solution No. 76 | | | | Phosphorus trichloride | 0.50 |
| Electrolyte Solution No. 77 | | | | Phosphoryl monofluoride dichloride | 0.50 |
| Electrolyte Solution No. 78 | | | | Phosphoryl difluoride monochloride | 0.50 |
| Electrolyte Solution No. 79 | | | | Phosphorus pentachloride | 0.50 |
| Electrolyte Solution No. 80 | | | | Sodium hexachloride phosphate | 0.50 |

### [Table 4]

**Table 4**

| Composition of Electrolyte Solution | | | | | |
|---|---|---|---|---|---|
| Electrolyte Solution No. | Nonaqueous solvent | Solute | | Chlorine-containing compound having P-Cl bond | |
| | | Type | Concentration [mol/L] | Type | Concentration expressed in terms of chlorine atom [mass%] |
| Electrolyte Solution No. 81 | | | | Sodium monochlorophosphate | 0.10 |
| Electrolyte Solution No. 82 | | | | Sodium dichlorophosphate | 0.10 |
| Electrolyte Solution No. 83 | | | | Sodium monochloro monofluorophosphate | 0.25 |
| Electrolyte Solution No. 84 | | | | Monochloro monofluorophosphoryl isocyanate | 0.50 |
| Electrolyte Solution No. 85 | | | | Methylphosphonic dichloride | 0.50 |
| Electrolyte Solution No. 86 | | | | Ethylphosphonic dichloride | 0.50 |
| Electrolyte Solution No. 87 | | | | Dimethyl chlorophosphate | 0.50 |
| Electrolyte Solution No. 88 | | | | Chloromethylphosphonic dichloride | 0.50 |
| Electrolyte Solution No. 89 | | | | Diphenyl chlorophosphate | 0.50 |
| Electrolyte Solution No. 90 | PC | NaPF₆ | 1.0 | Bis(2,2,2-trichloroethyl) chlorophosphate | 0.50 |
| Electrolyte Solution No. 91 | | | | 2-chloro-2-oxo-1,3,2-dioxaphospholane | 0.50 |
| Electrolyte Solution No. 92 | | | | Methyl dichlorophosphate | 0.50 |
| Electrolyte Solution No. 93 | | | | Ethyl dichlorophosphate | 0.50 |
| Electrolyte Solution No. 94 | | | | 2-chloroethyl dichlorophosphate | 0.50 |
| Electrolyte Solution No. 95 | | | | Phenyl dichlorophosphate | 0.50 |
| Electrolyte Solution No. 96 | | | | 4-chlorophenyl phosphorodichloridate | 0.50 |
| Electrolyte Solution No. 97 | | | | Methyl chlorofluorophosphate | 0.50 |
| Electrolyte Solution No. 98 | | | | Ethyl chlorofluorophosphate | 0.50 |
| Electrolyte Solution No. 99 | | | | Phenyl chlorofluorophosphate | 0.50 |
| Electrolyte Solution No. 100 | | | | | |

### [Preparation of Electrolyte Solution Containing Additive Having S(=O)₂-Cl Bond]

### (Preparation of Electrolyte Solution No. 101 to Electrolyte Solution No. 144)

An electrolyte solution No. 101 to an electrolyte solution No. 143 were prepared in the same manner as the method for preparing the electrolyte solution No. 1, except that a mixed solvent of PC, ethylene carbonate (hereinafter also referred to as "EC"), and DEC in a volume ratio of 1:1:2 was used as the nonaqueous solvent, and an additive having an S(=O)₂-Cl bond was dissolved at concentrations shown in Tables 5 and 6 instead of the additive having a C-Cl bond. Further, an electrolyte solution No. 144 was prepared in the same manner as the method for preparing the electrolyte solution No. 101 except that the additive having an S(=O)₂-Cl bond was not used.

### [Table 5]

**Table 5**

| Composition of Electrolyte Solution | | | | | |
|---|---|---|---|---|---|
| Electrolyte Solution No. | Nonaqueous solvent | Solute | | Chlorine-containing compound having SO₂-Cl bond | |
| | | Type | Concentration [mol/L] | Type | Concentration expressed in terms of chlorine atom [mass%] |
| Electrolyte Solution No. 101 | | | | Methanesulfonyl chloride | 0.02 |
| Electrolyte Solution No. 102 | | | | | 0.06 |
| Electrolyte Solution No. 103 | | | | | 0.50 |
| Electrolyte Solution No. 104 | | | | | 1.00 |
| Electrolyte Solution No. 105 | | | | | 3.00 |
| Electrolyte Solution No. 106 | | | | | 5.00 |
| Electrolyte Solution No. 107 | | | | Sulfuryl chlorofluoride | 0.02 |
| Electrolyte Solution No. 108 | | | | | 0.06 |
| Electrolyte Solution No. 109 | | | | | 0.50 |
| Electrolyte Solution No. 110 | | | | | 1.00 |
| Electrolyte Solution No. 111 | | | | | 3.00 |
| Electrolyte Solution No. 112 | PC:EC:DEC = 1:1:2 (volume ratio) | NaPF₆ | 1.0 | | 5.00 |
| Electrolyte Solution No. 113 | | | | Sodium chlorosulfonate | 0.02 |
| Electrolyte Solution No. 114 | | | | | 0.06 |
| Electrolyte Solution No. 115 | | | | | 0.50 |
| Electrolyte Solution No. 116 | | | | | 1.00 |
| Electrolyte Solution No. 117 | | | | | 3.00 |
| Electrolyte Solution No. 118 | | | | | 5.00 |
| Electrolyte Solution No. 119 | | | | Sodium bis(chlorosulfonyl)imide | 0.02 |
| Electrolyte Solution No. 120 | | | | | 0.06 |
| Electrolyte Solution No. 121 | | | | | 0.50 |
| Electrolyte Solution No. 122 | | | | | 1.00 |
| Electrolyte Solution No. 123 | | | | | 3.00 |
| Electrolyte Solution No. 124 | | | | | 5.00 |

### [Table 6]

**Table 6**

| Composition of Electrolyte Solution | | | | | |
|---|---|---|---|---|---|
| Electrolyte Solution No. | Nonaqueous solvent | Solute | | Chlorine-containing compound having SO₂-Cl bond | |
| | | Type | Concentration [mol/L] | Type | Concentration expressed in terms of chlorine atom [mass%] |
| Electrolyte Solution No. 125 | | | | Chloromethanesulfonyl chloride | 0.50 |
| Electrolyte Solution No. 126 | | | | Ethanesulfonyl chloride | 0.50 |
| Electrolyte Solution No. 127 | | | | 2-chloroethanesulfonyl chloride | 0.50 |
| Electrolyte Solution No. 128 | | | | 1-propanesulfonyl chloride | 0.50 |
| Electrolyte Solution No. 129 | | | | 1-pentylsulfonyl chloride | 0.50 |
| Electrolyte Solution No. 130 | | | | 2-propenesulfonyl chloride | 0.50 |
| Electrolyte Solution No. 131 | | | | Trifluoromethanesulfonyl chloride | 0.50 |
| Electrolyte Solution No. 132 | | | | Trichloromethanesulfonyl chloride | 0.50 |
| Electrolyte Solution No. 133 | | | | Sulfuryl chloride | 0.50 |
| Electrolyte Solution No. 134 | PC:EC:DEC = 1:1:2 (volume ratio) | NaPF₆ | 1.0 | Chlorosulfonyl isocyanate | 0.50 |
| Electrolyte Solution No. 135 | | | | Chlorosulfonic acid | 0.50 |
| Electrolyte Solution No. 136 | | | | Chloromethyl chlorosulfonate | 0.50 |
| Electrolyte Solution No. 137 | | | | Sodium (dichlorophosphoryl)(chlorosulfonyl)imide | 0.50 |
| Electrolyte Solution No. 138 | | | | Sodium (difluorophosphoryl)(chlorosulfonyl)imide | 0.50 |
| Electrolyte Solution No. 139 | | | | Benzenesulphonyl chloride | 0.50 |
| Electrolyte Solution No. 140 | | | | Benzene-1,3-disulfonyl chloride | 0.50 |
| Electrolyte Solution No. 141 | | | | p-toluenesulphonyl chloride | 0.50 |
| Electrolyte Solution No. 142 | | | | Methanedisulfonyl dichloride | 0.50 |
| Electrolyte Solution No. 143 | | | | 1,3-propane disulfonyl dichloride | 0.50 |
| Electrolyte Solution No. 144 | | | | | |

### [Preparation of Electrolyte Solution Containing Additive Having S(=O)-Cl Bond]

### (Preparation of Electrolyte Solution No. 145 to Electrolyte Solution No. 159)

An electrolyte solution No. 145 to an electrolyte solution No. 158 were prepared in the same manner as the method for preparing the electrolyte solution No. 1, except that a mixed solvent of PC and dimethyl carbonate (hereinafter also referred to as "DMC") in a volume ratio of 3:7 was used as the nonaqueous solvent, and an additive having an S(=O)-Cl bond was dissolved at a concentration shown in Table 7 instead of the additive having a C-Cl bond. Further, an electrolyte solution No. 159 was prepared in the same manner as the method for preparing the electrolyte solution No. 145 except that the additive having an S(=O)-Cl bond was not used.

### [Table 7]

**Table 7**

| Composition of Electrolyte Solution | | | | | |
|---|---|---|---|---|---|
| Electrolyte Solution No. | Nonaqueous solvent | Solute | | Chlorine-containing compound having SO-Cl bond | |
| | | Type | Concentration [mol/L] | Type | Concentration expressed in terms of chlorine atom [mass%] |
| Electrolyte Solution No. 145 | | | | | 0.02 |
| Electrolyte Solution No. 146 | | | | | 0.06 |
| Electrolyte Solution No. 147 | | | | | 0.50 |
| Electrolyte Solution No. 148 | | | | | 1.00 |
| Electrolyte Solution No. 149 | | | | Sulfinyl chloride | 3.00 |
| Electrolyte Solution No. 150 | | | | | 5.00 |
| Electrolyte Solution No. 151 | PC:DMC = 3:7 (volume ratio) | NaPF₆ | | | 0.02 |
| Electrolyte Solution No. 152 | | | | | 0.06 |
| Electrolyte Solution No. 153 | | | 1.0 | | 0.50 |
| Electrolyte Solution No. 154 | | | | | 1.00 |
| Electrolyte Solution No. 155 | | | | Methylsulfinyl chloride | 3.00 |
| Electrolyte Solution No. 156 | | | | | 5.00 |
| Electrolyte Solution No. 157 | | | | Ethylsulfinyl chloride | 0.50 |
| Electrolyte Solution No. 158 | | | | t-butylsulfinyl chloride | 0.50 |
| Electrolyte Solution No. 159 | | | | - | - |

### [Preparation of Electrolyte Solution Containing Additive Having Si-Cl Bond]

### (Preparation of Electrolyte Solution No. 160 to Electrolyte Solution No. 168)

Diethylene glycol dimethyl ether (hereinafter also referred to as "DG") was used as the nonaqueous solvent, and sodium bis(fluorosulfonyl)imide (hereinafter also referred to as "NaFSI") as the solute and an additive having a Si-Cl bond were dissolved in the solvent at concentrations described in Table 8, thereby preparing an electrolyte solution No. 160 to an electrolyte solution No. 167. Further, an electrolyte solution No. 168 was prepared in the same manner as the method for preparing the electrolyte solution No. 160 except that the additive having a Si-Cl bond was not used. The above preparation was performed with the liquid temperature maintained at 20°C to 30°C.

### [Table 8]

**Table 8**

| Composition of Electrolyte Solution | | | | | |
|---|---|---|---|---|---|
| Electrolyte Solution No. | Nonaqueous solvent | Solute | | Chlorine-containing compound having Si-Cl bond | |
| | | Type | Concentration [mol/L] | Type | Concentration expressed in terms of chlorine atom [mass%] |
| Electrolyte Solution No. 160 | | | | | 0.02 |
| Electrolyte Solution No. 161 | | | | | 0.06 |
| Electrolyte Solution No. 162 | | | | Trimethylchlorosilane | 0.50 |
| Electrolyte Solution No. 163 | | | | | 1.00 |
| Electrolyte Solution No. 164 | DG | NaFSI | | | 3.00 |
| Electrolyte Solution No. 165 | | | 3.0 | | 5.00 |
| Electrolyte Solution No. 166 | | | | Dimethyldichlorosilane | 0.50 |
| Electrolyte Solution No. 167 | | | | Tetrachlorosilane | 0.50 |
| Electrolyte Solution No. 168 | | | | - | - |

### <Preparation of Electrolyte Solution for Nonaqueous Potassium Ion Battery>

### (Preparation of Electrolyte Solution No. 169 to Electrolyte Solution No. 180)

A mixed solvent of EC and DEC in a volume ratio of 1: 1 was used as the nonaqueous solvent, and potassium bis(fluorosulfonyl)imide (hereinafter also referred to as "KFSI") as a potassium salt of the solute and a Cl-containing additive (chlorine-containing compound) were dissolved in the solvent at concentrations shown in Table 9, thereby preparing an electrolyte solution No. 169 to an electrolyte solution No. 179. Further, an electrolyte solution No. 180 was prepared in the same manner as the method for preparing the electrolyte solution No. 169 except that the Cl-containing additive was not used. The above preparation was performed with the liquid temperature maintained at 20°C to 30°C.

### [Table 9]

**Table 9**

| Composition of Electrolyte Solution | | | | | |
|---|---|---|---|---|---|
| Electrolyte Solution No. | Nonaqueous solvent | Solute | | Chlorine-containing compound | |
| | | Type | Concentration [mol/L] | Type | Concentration expressed in terms of chlorine atom [mass%] |
| Electrolyte Solution No. 169 | | | | | 0.02 |
| Electrolyte Solution No. 170 | | | | | 0.06 |
| Electrolyte Solution No. 171 | | | | Sulfuryl chlorofluoride | 0.50 |
| Electrolyte Solution No. 172 | | | | | 1.00 |
| Electrolyte Solution No. 173 | | | | | 3.00 |
| Electrolyte Solution No. 174 | EC:DEC = 1:1 (Volume ratio) | KFSI | 1.0 | | 5.00 |
| Electrolyte Solution No. 175 | | | | Dichloromethane | 0.50 |
| Electrolyte Solution No. 176 | | | | Potassium dichlorophosphate | 0.10 |
| Electrolyte Solution No. 177 | | | | Potassium chlorosulfonate | 0.10 |
| Electrolyte Solution No. 178 | | | | Sulfinyl chloride | 0.50 |
| Electrolyte Solution No. 179 | | | | Methyltrichlorosilane | 0.50 |
| Electrolyte Solution No. 180 | | | | - | - |

### <Regarding Nonaqueous Sodium Ion Battery>

### [Examples 1-1 to 1-56 and Comparative Example 1-1]

A high-temperature cycle test was performed on each test cell prepared with an electrolyte solution shown in Table 1 as a test electrolyte solution, NaNi_{0.5}Ti_{0.3}Mn_{0.2}O₂ as a positive electrode material, and hard carbon (Carbotron P, manufactured by KUREHA CORPORATION) as a negative electrode material, and a cycle characteristic, a resistance increase rate during the cycle test, and a gas generation amount were evaluated. These valuation results are shown in Tables 10 and 11. The test cell was produced as follows.

### A test positive electrode was prepared by the following procedure.

A slurry solution was prepared by mixing 90 mass% of NaNi_{0.5}Ti_{0.3}Mn_{0.2}O₂ as the positive electrode active material, 5 mass% of acetylene black as the electrically conductive agent, and 5 mass% of polyvinylidene fluoride (PVDF) as the binder, and further adding N-methylpyrrolidone as the solvent to the mixture in an amount of 82 mass% with respect to a total mass of the positive electrode active material, the electrically conductive agent, and the binder. The slurry solution was applied onto an aluminum foil as the positive electrode current collector and the applied product was dried at 150°C for 12 hours to obtain the test positive electrode including a positive electrode active material layer formed on the current collector.

### A test negative electrode was prepared by the following procedure.

A slurry solution was prepared by mixing 90 mass% of a hard carbon powder (Carbotron P manufactured by KUREHA CORPORATION) as the negative electrode active material and 10 mass% of polyvinylidene fluoride (PVDF) as the binder, and further adding N-methylpyrrolidone as the solvent to the mixture in an amount of 50 mass% with respect to a total mass of the negative electrode active material and the binder. The slurry solution was applied onto a copper foil as a negative electrode current collector and the applied product was dried at 150°C for 12 hours to obtain the test negative electrode including a negative electrode active material layer formed on the current collector.

The test positive electrode and the test negative electrode were placed via a polyethylene separator impregnated with the test electrolyte solution, and a test cell for 50 mAh having an aluminum laminate exterior was assembled.

### [Initial Charge and Discharge Test]

The assembled battery was charged and discharged at current density of 0.32 mA/cm² and constant-voltage charging termination current density of 0.08 mA/cm² by a constant-current constant-voltage method at an environmental temperature of 25°C with an upper limit charge voltage of 4.1 V and a lower limit discharge voltage of 1.5 V. This was defined as one charge and discharge cycle, and three cycles in total of charge and discharge were performed to stabilize the battery. Thereafter, the battery was charged again at current density of 0.32 mA/cm² and constant-voltage charging termination current density of 0.08 mA/cm² by a constant-current constant-voltage method at an environmental temperature of 25°C with a upper limit charge voltage of 4.1 V, and the charged battery is defined as being in a fully charging state. The cell in the fully charging state was subjected to AC impedance measurement using an electrochemical analyzer (ALS model 604E manufactured by BAS Co., Ltd.). A resistance value calculated from a circular arc observed at this time was defined as initial resistance. Thereafter, the discharging was performed at current density of 0.32 mA/cm² using a constant-current method with a lower limit discharge voltage of 1.5 V.

### [Evaluation of High-temperature Cycle Characteristic]

The cell after the initial test was subjected to a charge and discharge test at an environmental temperature of 60°C to evaluate the cycle characteristic. The cell was charged to 4.1 V and discharged to 1.5 V, and a charge-discharge cycle was repeated at current density of 1.56 mA/cm². Further, a degree of deterioration of the cell was evaluated with the discharge capacity maintenance rate at a 500th cycle in the charge and discharge test at the environmental temperature of 60°C (evaluation of high-temperature cycle characteristic). A "discharge capacity maintenance rate after the high-temperature cycle" was determined by the following formula. A discharge capacity at a first cycle in the charge and discharge test at the environmental temperature of 60°C was defined as an initial discharge capacity.

### <Discharge Capacity Maintenance Rate at 500th Cycle>

Discharge capacity maintenance rate after high-temperature cycle (%) = (discharge capacity at 500th cycle/initial discharge capacity) x 100

### [Evaluation of Resistance Increase Rate]

The cell after the above cycle test was charged at current density of 0.32 mA/cm² and constant-voltage charging termination current density of 0.08 mA/cm² by a constant-current constant-voltage method at an environmental temperature of 25°C with a upper limit charge voltage of 4.1 V to be in a fully charging state. The cell in the fully charging state was subjected to AC impedance measurement using an electrochemical analyzer (ALS model 604E manufactured by BAS Co., Ltd.). A resistance value calculated from a circular arc observed at this time was defined as resistance after the cycle test. Thereafter, the discharging was performed at current density of 0.32 mA/cm² using a constant-current method with a lower limit discharge voltage of 1.5 V. A degree of deterioration of the cell was evaluated by a resistance increase rate in the cycle test (resistance increase rate). A "resistance increase rate during the high-temperature cycle" was determined by the following formula.

### <Resistance Increase Rate>

Resistance increase rate during high-temperature cycle (%) = (resistance after cycle test/initial resistance) × 100

### [Evaluation of Gas Generation Amount]

Before and after the evaluation of the high-temperature cycle characteristic, a volume of the cell was measured by Archimedes method using silicone oil (silicone oil KF54, manufactured by Shin-Etsu Chemical Co., Ltd.), and a gas generation amount V (unit: cm³) (gas generation amount V = volume V2 of cell after evaluation of high-temperature cycle characteristic - volume V1 of cell before evaluation of high-temperature cycle characteristic) was determined. Based on the gas generation amount V, a "gas generation amount during the high-temperature cycle" was evaluated.

### [Table 10]

**Table 10**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 1-1 | Electrolyte Solution No. 1 | | | 101 | 99 | 98 |
| Example 1-2 | Electrolyte Solution No. 2 | | | 110 | 81 | 92 |
| Example 1-3 | Electrolyte Solution No. 3 | | | 116 | 72 | 90 |
| Example 1-4 | Electrolyte Solution No. 4 | | | 118 | 66 | 86 |
| Example 1-5 | Electrolyte Solution No. 5 | | | 117 | 78 | 91 |
| Example 1-6 | Electrolyte Solution No. 6 | | | 102 | 97 | 99 |
| Example 1-7 | Electrolyte Solution No. 7 | | | 101 | 98 | 99 |
| Example 1-8 | Electrolyte Solution No. 8 | | | 111 | 78 | 82 |
| Example 1-9 | Electrolyte Solution No. 9 | | | 120 | 68 | 78 |
| Example 1-10 | Electrolyte Solution No. 10 | | | 124 | 57 | 71 |
| Example 1-11 | Electrolyte Solution No. 11 | | | 110 | 78 | 80 |
| Example 1-12 | Electrolyte Solution No. 12 | | | 102 | 98 | 97 |
| Example 1-13 | Electrolyte Solution No. 13 | | | 102 | 96 | 97 |
| Example 1-14 | Electrolyte Solution No. 14 | | | 112 | 83 | 82 |
| Example 1-15 | Electrolyte Solution No. 15 | NaNi_{0.5}Ti_{0.3}Mn_{0.2}O₂ | | 115 | 80 | 80 |
| Example 1-16 | Electrolyte Solution No. 16 | | Hard carbon | 121 | 75 | 75 |
| Example 1-17 | Electrolyte Solution No. 17 | | | 116 | 76 | 78 |
| Example 1-18 | Electrolyte Solution No. 18 | | | 103 | 96 | 96 |
| Example 1-19 | Electrolyte Solution No. 19 | | | 104 | 88 | 94 |
| Example 1-20 | Electrolyte Solution No. 20 | | | 113 | 76 | 81 |
| Example 1-21 | Electrolyte Solution No. 21 | | | 102 | 92 | 93 |
| Example 1-22 | Electrolyte Solution No. 22 | | | 107 | 86 | 96 |
| Example 1-23 | Electrolyte Solution No. 23 | | | 105 | 86 | 87 |
| Example 1-24 | Electrolyte Solution No. 24 | | | 111 | 74 | 86 |
| Example 1-25 | Electrolyte Solution No. 25 | | | 117 | 69 | 72 |
| Example 1-26 | Electrolyte Solution No. 26 | | | 102 | 90 | 95 |
| Example 1-27 | Electrolyte Solution No. 27 | | | 106 | 83 | 86 |
| Example 1-28 | Electrolyte Solution No. 28 | | | 104 | 85 | 91 |
| Example 1-29 | Electrolyte Solution No. 29 | | | 115 | 71 | 79 |
| Example 1-30 | Electrolyte Solution No. 30 | | | 112 | 88 | 86 |

### [Table 11]

**Table 11**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%\| | Resistance increase rate during high-temperature cycle [%] | Gas generation amount during high-temperature cycle [%] |
| Example 1-31 | Electrolyte Solution No. 31 | | | 119 | 72 | 78 |
| Example 1-32 | Electrolyte Solution No. 32 | | | 116 | 71 | 80 |
| Example 1-33 | Electrolyte Solution No. 33 | | | 108 | 76 | 85 |
| Example 1-34 | Electrolyte Solution No. 34 | | | 102 | 91 | 93 |
| Example 1-35 | Electrolyte Solution No. 35 | | | 117 | 73 | 77 |
| Example 1-36 | Electrolyte Solution No. 36 | | | 111 | 81 | 80 |
| Example 1-37 | Electrolyte Solution No. 37 | | | 106 | 86 | 88 |
| Example 1-38 | Electrolyte Solution No. 38 | | | 111 | 78 | 82 |
| Example 1-39 | Electrolyte Solution No. 39 | | | 117 | 76 | 85 |
| Example 1-40 | Electrolyte Solution No. 40 | | | 107 | 88 | 94 |
| Example 1-41 | Electrolyte Solution No. 41 | | | 103 | 91 | 96 |
| Example 1-42 | Electrolyte Solution No. 42 | | | 106 | 78 | 93 |
| Example 1-43 | Electrolyte Solution No. 43 | | | 116 | 75 | 89 |
| Example 1-44 | Electrolyte Solution No. 44 | NaNi_{0.5}Ti_{0.3}Mn_{0.2}O₂ | Hard carbon | 108 | 87 | 88 |
| Example 1-45 | Electrolyte Solution No. 45 | | | 116 | 79 | 86 |
| Example 1-46 | Electrolyte Solution No. 46 | | | 105 | 91 | 92 |
| Example 1-47 | Electrolyte Solution No. 47 | | | 101 | 83 | 91 |
| Example 1-48 | Electrolyte Solution No. 48 | | | 106 | 91 | 90 |
| Example 1-49 | Electrolyte Solution No. 49 | | | 119 | 76 | 85 |
| Example 1-50 | Electrolyte Solution No. 50 | | | 112 | 79 | 84 |
| Example 1-51 | Electrolyte Solution No. 51 | | | 110 | 68 | 78 |
| Example 1-52 | Electrolyte Solution No. 52 | | | 112 | 75 | 84 |
| Example 1-53 | Electrolyte Solution No. 53 | | | 107 | 93 | 87 |
| Example 1-54 | Electrolyte Solution No. 54 | | | 102 | 86 | 95 |
| Example 1-55 | Electrolyte Solution No. 55 | | | 104 | 91 | 97 |
| Example 1-56 | Electrolyte Solution No. 56 | | | 103 | 89 | 97 |
| Comparative Example 1-1 | Electrolyte Solution No. 57 | | | 100 | 100 | 100 |

In Tables 10 and 11, evaluation results of Examples 1-1 to 1-56 were expressed with relative values with an evaluation result of Comparative Example 1-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Tables 10 and 11, it was found that the addition of a compound having a C-Cl bond improved the cycle characteristic at the high temperature, prevented or reduced the increase in resistance, and reduced the gas generation.

Further, in Examples 1-1 to 1-18, it was found that an effect of improving the high-temperature cycle characteristic was further exhibited by adding a predetermined amount (0.06 mass% to 3.00 mass% with respect to a total amount of an electrolyte solution) of the compound having a C-Cl bond.

### [Examples 2-1 to 2-42 and Comparative Example 2-1]

Cells were prepared in the same manner as in Example 1-1 except that NaFe_{0.4}Mn_{0.3}Ni_{0.3}O₂ was used as the positive electrode active material, and electrolyte solutions shown in Tables 3 and 4 were used. And, a high-temperature cycle test was performed for each of the cells, and a cycle characteristic, a resistance increase rate during the cycle test, and a gas generation amount were evaluated. These valuation results are shown in Tables 12 and 13.

### [Table 12]

**Table 12**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 2-1 | Electrolyte Solution No. 58 | | | 102 | 98 | 99 |
| Example 2-2 | Electrolyte Solution No. 59 | | | 114 | 92 | 82 |
| Example 2-3 | Electrolyte Solution No. 60 | | | 118 | 79 | 69 |
| Example 2-4 | Electrolyte Solution No. 61 | | | 123 | 70 | 60 |
| Example 2-5 | Electrolyte Solution No. 62 | | | 113 | 73 | 71 |
| Example 2-6 | Electrolyte Solution No. 63 | | | 102 | 98 | 96 |
| Example 2-7 | Electrolyte Solution No. 64 | | | 101 | 97 | 95 |
| Example 2-8 | Electrolyte Solution No. 65 | | | 110 | 71 | 80 |
| Example 2-9 | Electrolyte Solution No. 66 | | | 129 | 59 | 59 |
| Example 2-10 | Electrolyte Solution No. 67 | | | 125 | 63 | 60 |
| Example 2-11 | Electrolyte Solution No. 68 | | | 119 | 69 | 71 |
| Example 2-12 | Electrolyte Solution No. 69 | NaFe_{0.4}Mn_{0.3}Ni_{0.3}O₂ | Hard carbon | 103 | 97 | 96 |
| Example 2-13 | Electrolyte Solution No. 70 | | | 102 | 99 | 99 |
| Example 2-14 | Electrolyte Solution No. 71 | | | 114 | 80 | 79 |
| Example 2-15 | Electrolyte Solution No. 72 | | | 129 | 58 | 69 |
| Example 2-16 | Electrolyte Solution No. 73 | | | 130 | 52 | 64 |
| Example 2-17 | Electrolyte Solution No. 74 | | | 122 | 64 | 76 |
| Example 2-18 | Electrolyte Solution No. 75 | | | 101 | 98 | 95 |
| Example 2-19 | Electrolyte Solution No. 76 | | | 110 | 81 | 82 |
| Example 2-20 | Electrolyte Solution No. 77 | | | 118 | 73 | 72 |
| Example 2-21 | Electrolyte Solution No. 78 | | | 115 | 76 | 75 |
| Example 2-22 | Electrolyte Solution No. 79 | | | 105 | 88 | 86 |
| Example 2-23 | Electrolyte Solution No. 80 | | | 103 | 90 | 89 |

### [Table 13]

**Table 13**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 2-24 | Electrolyte Solution No. 81 | | | 103 | 87 | 88 |
| Example 2-25 | Electrolyte Solution No. 82 | | | 116 | 61 | 70 |
| Example 2-26 | Electrolyte Solution No. 83 | | | 121 | 68 | 64 |
| Example 2-27 | Electrolyte Solution No. 84 | | | 112 | 79 | 78 |
| Example 2-28 | Electrolyte Solution No. 85 | | | 113 | 80 | 75 |
| Example 2-29 | Electrolyte Solution No. 86 | | | 106 | 86 | 82 |
| Example 2-30 | Electrolyte Solution No. 87 | | | 123 | 71 | 67 |
| Example 2-31 | Electrolyte Solution No. 88 | | | 121 | 72 | 67 |
| Example 2-32 | Electrolyte Solution No. 89 | | | 106 | 84 | 80 |
| Example 2-33 | Electrolyte Solution No. 90 | NaFe_{0.4}Mn_{0.3}Ni_{0.3}O₂ | Hard carbon | 110 | 73 | 69 |
| Example 2-34 | Electrolyte Solution No. 91 | | | 105 | 91 | 84 |
| Example 2-35 | Electrolyte Solution No. 92 | | | 113 | 79 | 71 |
| Example 2-36 | Electrolyte Solution No. 93 | | | 103 | 91 | 88 |
| Example 2-37 | Electrolyte Solution No. 94 | | | 112 | 76 | 68 |
| Example 2-38 | Electrolyte Solution No. 95 | | | 106 | 86 | 77 |
| Example 2-39 | Electrolyte Solution No. 96 | | | 104 | 88 | 78 |
| Example 2-40 | Electrolyte Solution No. 97 | | | 108 | 94 | 95 |
| Example 2-41 | Electrolyte Solution No. 98 | | | 108 | 86 | 81 |
| Example 2-42 | Electrolyte Solution No. 99 | | | 110 | 87 | 79 |
| Comparative Example 2-1 | Electrolyte Solution No. 100 | | | 100 | 100 | 100 |

In Tables 12 and 13, the evaluation results of Examples 2-1 to 2-42 are expressed with relative values with an evaluation result of Comparative Example 2-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Tables 12 and 13, it was found that the addition of a compound having a P-Cl bond improved the cycle characteristic at the high temperature, reduced or prevented the increase in resistance, and reduced the gas generation.

Further, in Examples 2-1 to 2-18, it was found that the effect of improving the high-temperature cycle characteristic was further exhibited by adding a predetermined amount of the compound having a P-Cl bond.

### [Examples 3-1 to 3-43 and Comparative Example 3-1]

Cells were prepared in the same manner as in Example 1-1 except that NaNi_{1/3}Ti_{1/3}Mn_{1/3}O₂ was used as the positive electrode active material, and electrolyte solutions shown in Tables 5 and 6 were used. And, a high-temperature cycle test was performed for each of the cells, and a cycle characteristic, a resistance increase rate during the cycle test, and a gas generation amount were evaluated. These valuation results are shown in Tables 14 and 15.

### [Table 14]

**Table 14**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 3-1 | Electrolyte Solution No. 101 | | | 101 | 97 | 96 |
| Example 3-2 | Electrolyte Solution No. 102 | | | 118 | 72 | 63 |
| Example 3-3 | Electrolyte Solution No. 103 | | | 122 | 54 | 51 |
| Example 3-4 | Electrolyte Solution No. 104 | | | 124 | 49 | 50 |
| Example 3-5 | Electrolyte Solution No. 105 | | | 120 | 63 | 68 |
| Example 3-6 | Electrolyte Solution No. 106 | | | 103 | 99 | 95 |
| Example 3-7 | Electrolyte Solution No. 107 | | | 102 | 99 | 98 |
| Example 3-8 | Electrolyte Solution No. 108 | | | 121 | 81 | 80 |
| Example 3-9 | Electrolyte Solution No. 109 | | | 129 | 69 | 68 |
| Example 3-10 | Electrolyte Solution No. 110 | | | 130 | 70 | 63 |
| Example 3-11 | Electrolyte Solution No. 111 | | | 126 | 72 | 69 |
| Example 3-12 | Electrolyte Solution No. 112 | NaNi_{1/3}Ti_{1/3}Mn_{1/3}O₂ | Hard carbon | 104 | 96 | 94 |
| Example 3-13 | Electrolyte Solution No. 113 | | | 101 | 96 | 97 |
| Example 3-14 | Electrolyte Solution No. 114 | | | 114 | 81 | 80 |
| Example 3-15 | Electrolyte Solution No. 115 | | | 122 | 46 | 70 |
| Example 3-16 | Electrolyte Solution No. 116 | | | 135 | 39 | 65 |
| Example 3-17 | Electrolyte Solution No. 117 | | | 131 | 42 | 62 |
| Example 3-18 | Electrolyte Solution No. 118 | | | 102 | 95 | 96 |
| Example 3-19 | Electrolyte Solution No. 119 | | | 100 | 99 | 98 |
| Example 3-20 | Electrolyte Solution No. 120 | | | 104 | 88 | 97 |
| Example 3-21 | Electrolyte Solution No. 121 | | | 125 | 64 | 86 |
| Example 3-22 | Electrolyte Solution No. 122 | | | 126 | 55 | 81 |
| Example 3-23 | Electrolyte Solution No. 123 | | | 110 | 77 | 92 |
| Example 3-24 | Electrolyte Solution No. 124 | | | 102 | 98 | 99 |

**[Table 15]**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 3-25 | Electrolyte Solution No. 125 | | | 123 | 68 | 89 |
| Example 3-26 | Electrolyte Solution No. 126 | | | 108 | 71 | 82 |
| Example 3-27 | Electrolyte Solution No. 127 | | | 109 | 79 | 87 |
| Example 3-28 | Electrolyte Solution No. 128 | | | 105 | 80 | 83 |
| Example 3-29 | Electrolyte Solution No. 129 | | | 107 | 84 | 90 |
| Example 3-30 | Electrolyte Solution No. 130 | | | 104 | 81 | 88 |
| Example 3-31 | Electrolyte Solution No. 131 | | | 120 | 69 | 74 |
| Example 3-32 | Electrolyte Solution No. 132 | | | 123 | 63 | 79 |
| Example 3-33 | Electrolyte Solution No. 133 | | | 126 | 59 | 63 |
| Example 3-34 | Electrolyte Solution No. 134 | NaNi_{1/3}Ti_{1/3}Mn_{1/3}O₂ | Hard carbon | 119 | 59 | 69 |
| Example 3-35 | Electrolyte Solution No. 135 | | | 106 | 73 | 89 |
| Example 3-36 | Electrolyte Solution No. 136 | | | 123 | 67 | 81 |
| Example 3-37 | Electrolyte Solution No. 137 | | | 120 | 64 | 79 |
| Example 3-38 | Electrolyte Solution No. 138 | | | 121 | 68 | 80 |
| Example 3-39 | Electrolyte Solution No. 139 | | | 108 | 81 | 89 |
| Example 3-40 | Electrolyte Solution No. 140 | | | 112 | 79 | 83 |
| Example 3-41 | Electrolyte Solution No. 141 | | | 114 | 76 | 81 |
| Example 3-42 | Electrolyte Solution No. 142 | | | 121 | 52 | 76 |
| Example 3-43 | Electrolyte Solution No. 143 | | | 118 | 61 | 81 |
| Comparative Example 3-1 | Electrolyte Solution No. 144 | | | 100 | 100 | 100 |

In Tables 14 and 15, the evaluation results of Examples 3-1 to 3-43 are expressed with relative values with an evaluation result of Comparative Example 3-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Tables 14 and 15, it was found that the addition of a compound having an S(=O)₂-Cl bond improved the cycle characteristic at the high temperature, reduced or prevented the increase in resistance, and reduced the gas generation.

Further, in Examples 3-1 to 3-18, it was found that the effect of improving the high-temperature cycle characteristic was further exhibited by adding a predetermined amount of the compound having an S(=O)₂-Cl bond.

### [Examples 4-1 to 4-14 and Comparative Example 4-1]

Cells were prepared in the same manner as in Example 1-1 except that Na_{2/3}Ni_{1/3}Ti_{1/6}Mn_{1/2}O₂ was used as the positive electrode active material, and electrolyte solutions shown in Table 7 were used. And, a high-temperature cycle test was performed for each of the cells, and a cycle characteristic, a resistance increase rate during the cycle test, and a gas generation amount were evaluated. These evaluation results are shown in Table 16.

### [Table 16]

**Table 16**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 4-1 | Electrolyte Solution No. 145 | | | 101 | 99 | 98 |
| Example 4-2 | Electrolyte Solution No. 146 | | | 116 | 78 | 72 |
| Example 4-3 | Electrolyte Solution No. 147 | | | 122 | 76 | 68 |
| Example 4-4 | Electrolyte Solution No. 148 | | | 124 | 61 | 61 |
| Example 4-5 | Electrolyte Solution No. 149 | | | 115 | 83 | 77 |
| Example 4-6 | Electrolyte Solution No. 150 | | | 103 | 96 | 93 |
| Example 4-7 | Electrolyte Solution No. 151 | | | 102 | 99 | 96 |
| Example 4-8 | Electrolyte Solution No. 152 | Na_{2/3}Ni_{1/3}Ti_{1/6}Mn_{1/2}O₂ | Hard carbon | 113 | 89 | 88 |
| Example 4-9 | Electrolyte Solution No. 153 | | | 121 | 85 | 81 |
| Example 4-10 | Electrolyte Solution No. 154 | | | 125 | 72 | 79 |
| Example 4-11 | Electrolyte Solution No. 155 | | | 118 | 73 | 80 |
| Example 4-12 | Electrolyte Solution No. 156 | | | 104 | 96 | 95 |
| Example 4-13 | Electrolyte Solution No. 157 | | | 115 | 80 | 76 |
| Example 4-14 | Electrolyte Solution No. 158 | | | 112 | 81 | 81 |
| Comparative Example 4-1 | Electrolyte Solution No. 159 | | | 100 | 100 | 100 |

In Table 16, evaluation results of Examples 4-1 to 4-14 are expressed with relative values with an evaluation result of Comparative Example 4-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Table 16, it was found that the addition of a compound having an S(=O)-Cl bond improved the cycle characteristic at the high temperature, reduced or prevented the increase in resistance, and reduced the gas generation.

Further, in Examples 4-1 to 4-12, it was found that the effect of improving the high-temperature cycle characteristic was further exhibited by adding a predetermined amount of the compound having an S(=O)-Cl bond.

### [Examples 5-1 to 5-8 and Comparative Example 5-1]

Cells were prepared in the same manner as in Example 1-1 except that NaCrO₂ was used as the positive electrode active material, and electrolyte solutions shown in Table 8 were used. And, an initial charge and discharge test and a high-temperature cycle test were performed except for changing the upper limit charge voltage to 3.3 V, and a cycle characteristic, a resistance increase rate during the cycle test (the upper limit charge voltage was changed to 3.3 V), and a gas generation amount were evaluated. These evaluation results are shown in Table 17.

### [Table 17]

**Table 17**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 5-1 | Electrolyte Solution No. 160 | | | 101 | 99 | 99 |
| Example 5-2 | Electrolyte Solution No. 161 | | | 110 | 86 | 90 |
| Example 5-3 | Electrolyte Solution No. 162 | | | 112 | 84 | 88 |
| Example 5-4 | Electrolyte Solution No. 163 | | | 111 | 83 | 84 |
| Example 5-5 | Electrolyte Solution No. 164 | NaCrO₂ | Hard carbon | 109 | 84 | 85 |
| Example 5-6 | Electrolyte Solution No. 165 | | | 101 | 99 | 98 |
| Example 5-7 | Electrolyte Solution No. 166 | | | 110 | 79 | 81 |
| Example 5-8 | Electrolyte Solution No. 167 | | | 104 | 91 | 96 |
| Comparative Example 5-1 | Electrolyte Solution No. 168 | | | 100 | 100 | 100 |

In Table 17, the evaluation results of Examples 5-1 to 5-8 are expressed with relative values with an evaluation result of Comparative Example 5-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Table 17, it was found that the addition of a compound having a Si-Cl bond improved the cycle characteristic at the high temperature, reduced or prevented the increase in resistance, and reduced the gas generation.

Further, in Examples 5-1 to 5-6, it was found that the effect of improving the high-temperature cycle characteristic was further exhibited by adding a predetermined amount of the compound having a Si-Cl bond.

### <Nonaqueous Potassium Ion Battery>

### [Examples 6-1 to 6-11 and Comparative Example 6-1]

A high-temperature cycle test was performed on each test cell prepared with an electrolyte solution shown in Table 9 as the test electrolyte solution, K₂Mn[Fe(CN)₆] as the positive electrode material, and artificial graphite as the negative electrode material. And, a cycle characteristic, a resistance increase rate during the cycle test, and a gas generation amount were evaluated. These evaluation results are shown in Table 18. The test cell was produced as follows.

A test positive electrode was prepared by the following procedure.

A slurry solution was prepared by mixing 85 mass% of K₂Mn[Fe(CN)₆] as the positive electrode active material, 8 mass% of acetylene black as the electrically conductive agent, and 7 mass% of polyvinylidene fluoride (PVDF) as the binder, and further adding N-methylpyrrolidone as the solvent to the mixture in an amount of 82 mass% with respect to a total mass of the positive electrode active material, the electrically conductive agent, and the binder. The slurry solution was applied onto an aluminum foil as the positive electrode current collector and the applied product was dried at 150°C for 12 hours to obtain the test positive electrode including a positive electrode active material layer formed on the current collector.

A test negative electrode was prepared by the following procedure.

A slurry solution was prepared by mixing 90 mass% of artificial graphite as the negative electrode active material and 10 mass% of polyvinylidene fluoride (PVDF) as the binder, and further adding N-methylpyrrolidone as the solvent to the mixture in an amount of 50 mass% with respect to a total mass of the negative electrode active material and the binder. The slurry solution was applied onto a copper foil as a negative electrode current collector and the applied product was dried at 150°C for 12 hours to obtain the test negative electrode including a negative electrode active material layer formed on the current collector.

The test positive electrode and the test negative electrode were placed via a polyethylene separator impregnated with the test electrolyte solution, and a test cell for 20 mAh having an aluminum laminate exterior was assembled.

### [Initial Charge and Discharge Test]

The assembled battery was charged and discharged at current density of 0.13 mA/cm² and constant-voltage charging termination current density of 0.03 mA/cm² by a constant-current constant-voltage method at an environmental temperature of 25°C with an upper limit charge voltage of 4.1 V and a lower limit discharge voltage of 2.0 V. This was defined as one charge and discharge cycle, and three cycles in total of charge and discharge were performed to stabilize the battery. Thereafter, the battery was charged again at current density of 0.13 mA/cm² and constant-voltage charging termination current density of 0.03 mA/cm² by a constant-current constant-voltage method at an environmental temperature of 25°C with a upper limit charge voltage of 4.1 V, and the charged battery was defined as being in a fully charging state. The cell in the fully charging state was subjected to AC impedance measurement using an electrochemical analyzer (ALS model 604E manufactured by BAS Co., Ltd.). A resistance value calculated from a circular arc observed at this time was defined as initial resistance. Thereafter, the discharging was performed at current density of 0.13 mA/cm² using a constant-current method with a lower limit discharge voltage of 2.0 V.

### [Evaluation of High-temperature Cycle Characteristic]

The cell after the initial test was subjected to a charge and discharge test at an environmental temperature of 60°C to evaluate the cycle characteristic. The cell was charged to 4.1 V and discharged to 2.0 V, and the charge-discharge cycle was repeated at current density of 0.62 mA/cm². Further, a degree of deterioration of the cell was evaluated with the discharge capacity maintenance rate at a 100th cycle in the charge and discharge test at the environmental temperature of 60°C (evaluation of high-temperature cycle characteristic). A "discharge capacity maintenance rate after the high-temperature cycle" was determined by the following formula. A discharge capacity at a first cycle in the charge and discharge test at the environmental temperature of 60°C was defined as an initial discharge capacity.

### <Discharge Capacity Maintenance Rate at 100th Cycle>

Discharge capacity maintenance rate after high-temperature cycle (%) = (discharge capacity at 100th cycle/initial discharge capacity) x 100

### [Evaluation of Resistance Increase Rate]

The cell after the above cycle test was charged at current density of 0.13 mA/cm² and constant-voltage charging termination current density of 0.03 mA/cm² by a constant-current constant-voltage method at an environmental temperature of 25°C with a upper limit charge voltage of 4.1 V to enter a fully charging state. The cell in the fully charging state was subjected to AC impedance measurement using an electrochemical analyzer (ALS model 604E manufactured by BAS Co., Ltd.). A resistance value calculated from a circular arc observed at this time was defined as resistance after the cycle test. Thereafter, the discharging was performed at current density of 0.13 mA/cm² using a constant-current method with a lower limit discharge voltage of 2.0 V. A degree of deterioration of the cell was evaluated by a resistance increase rate in the cycle test (resistance increase rate). A "resistance increase rate during the high-temperature cycle" was determined by the following formula.

### <Resistance Increase Rate>

Resistance increase rate during high-temperature cycle (%) = (resistance after cycle test/initial resistance) × 100

### [Evaluation of Gas Generation Amount]

Before and after the evaluation of the high-temperature cycle characteristic, a volume of the cell was measured by Archimedes method using silicone oil (silicone oil KF54, manufactured by Shin-Etsu Chemical Co., Ltd.), and a gas generation amount V (unit: cm³) (gas generation amount V = volume V2 of cell after evaluation of high-temperature cycle characteristic - volume V1 of cell before evaluation of high-temperature cycle characteristic) was determined. Based on the gas generation amount V, a "gas generation amount during the high-temperature cycle" was evaluated.

### [Table 18]

**Table 18**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 6-1 | Electrolyte Solution No. 169 | | | 101 | 98 | 99 |
| Example 6-2 | Electrolyte Solution No. 170 | | | 117 | 80 | 81 |
| Example 6-3 | Electrolyte Solution No. 171 | | | 130 | 54 | 61 |
| Example 6-4 | Electrolyte Solution No. 172 | | | 125 | 62 | 76 |
| Example 6-5 | Electrolyte Solution No. 173 | | | 124 | 64 | 72 |
| Example 6-6 | Electrolyte Solution No. 174 | | | 104 | 96 | 93 |
| Example 6-7 | Electrolyte Solution No. 175 | K₂Mn[Fe(CN)₆] | Artificial graphite | 111 | 78 | 86 |
| Example 6-8 | Electrolyte Solution No. 176 | | | 109 | 70 | 68 |
| Example 6-9 | Electrolyte Solution No. 177 | | | 115 | 61 | 78 |
| Example 6-10 | Electrolyte Solution No. 178 | | | 117 | 80 | 73 |
| Example 6-11 | Electrolyte Solution No. 179 | | | 106 | 85 | 70 |
| Comparative Example 6-1 | Electrolyte Solution No. 180 | | | 100 | 100 | 100 |

In Table 18, evaluation results of Examples 6-1 to 6-11 are expressed with relative values with an evaluation result of Comparative Example 6-1 as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Table 18, it was found that the addition of a chlorine-containing compound improved the cycle characteristic at the high temperature, reduced or prevented the increase in resistance, and reduced the gas generation, even in a nonaqueous potassium ion battery.

Further, in Examples 6-1 to 6-6, it was found that the effect of improving the high-temperature cycle characteristic was further exhibited by adding a predetermined amount of the chlorine-containing compound.

### <Preparation of Electrolyte Solution for Nonaqueous Sodium Ion Battery-2>

### [Preparation of Additive-containing Electrolyte Solution]

### (Preparation of Electrolyte Solution No. 181 to Electrolyte Solution No. 192)

A mixed solvent obtained by mixing PC and DEC at a volume ratio of 1:1 was used as the nonaqueous solvent, NaPF₆ as the sodium salt of the solute, sodium chlorosulfonate as the chlorine-containing compound, and fluoroethylene carbonate as other additive (also referred to as a second compound) were dissolved in the solvent at concentrations shown in Table 19, thereby preparing an electrolyte solution No. 181. The above preparation was performed with the liquid temperature maintained at 20°C to 30°C.

Further, an electrolyte solution No. 182 to an electrolyte solution No. 186 were prepared in the same manner as the method for preparing the electrolyte solution No. 181 except that the type and the concentration of the other additive were changed to those shown in Table 19. Further, an electrolyte solution No. 187 to an electrolyte solution No. 192 were prepared in the same manner as the method for preparing the electrolyte solution No. 181 to the electrolyte solution No. 186 except that sodium chlorosulfonate was not added.

### [Table 19]

**Table 19**

| Electrolyte Solution No. | Nonaqueous solvent | Solute | | Chlorine-containing compound | | Second compound | |
|---|---|---|---|---|---|---|---|
| | | Type | Concentration [mol/L] | Type | Concentration expressed in terms of chlorine atom [mass%] | Type | Content [mass%] |
| Electrolyte Solution No. 181 | | | | Sodium chlorosulfonate | 1.00 | Fluoroethylene carbonate | 1.00 |
| Electrolyte Solution No. 182 | | | | | | Vinylene carbonate | 1.00 |
| Electrolyte Solution No. 183 | | | | | | Sodium tetrafluoroborate | 0.20 |
| Electrolyte Solution No. 184 | | | | | | Sodium difluorophosphate | 1.00 |
| Electrolyte Solution No. 185 | | | | | | Sodium fluorosulfonate | 1.50 |
| Electrolyte Solution No. 186 | PC:DEC = 1:1 (volume ratio) | NaPF₆ | 1.0 | | | Sodium tetrafluoro(oxalato)phosphate | 1.00 |
| Electrolyte Solution No. 187 | | | | | | Fluoroethylene carbonate | 1.00 |
| Electrolyte Solution No. 188 | | | | | | Vinylene carbonate | 1.00 |
| Electrolyte Solution No. 189 | | | | | | Sodium tetrafluoroborate | 0.20 |
| Electrolyte Solution No. 190 | | | | | | Sodium difluorophosphate | 1.00 |
| Electrolyte Solution No. 191 | | | | | | Sodium fluorosulfonate | 1.50 |
| Electrolyte Solution No. 192 | | | | | | Sodium tetrafluoro(oxalato)phosphate | 1.00 |

### <Preparation of Electrolyte Solution for Nonaqueous Potassium Ion Battery-2>

### [Preparation of Additive-containing Electrolyte Solution]

### (Preparation of Electrolyte Solution No. 193 to Electrolyte Solution No. 198)

A mixed solvent obtained by mixing EC and DEC in a volume ratio of 1:1 was used as the nonaqueous solvent, and KFSI as the potassium salt of the solute, sulfuryl chlorofluoride as the chlorine-containing compound, and fluoroethylene carbonate as other additive were dissolved in the solvent at concentrations shown in Table 20, thereby preparing an electrolyte solution No. 193. The above preparation was performed with the liquid temperature maintained at 20°C to 30°C.

Further, an electrolyte solution No. 194 and an electrolyte solution No. 195 were prepared in the same manner as the mothod for preparing the electrolyte solution No. 193 except that the type of the other additive was changed to those shown in Table 20. Further, an electrolyte solution No. 196 to an electrolyte solution No. 198 were prepared in the same manner as the method for preparing the electrolyte solution No. 193 to the electrolyte solution No. 195 except that sulfuryl chlorofluoride was not added.

### [Table 20]

**Table 20**

| Electrolyte Solution No. | Nonaqueous solvent | Solute | | Chlorine-containing compound | | Second compound | |
|---|---|---|---|---|---|---|---|
| | | Type | Concentration [mol/L] | Type | Concentration expressed in terms of chlorine atom [mass%] | Type | Content [mass%] |
| Electrolyte Solution No. 193 | EC:DEC = 1:1 (volume ratio) | KFSI | 1.0 | Sulfuryl chlorofluoride | 1.00 | Fluoroethylene carbonate | 1.00 |
| Electrolyte Solution No. 194 | | | | | | Vinylene carbonate | 1.00 |
| Electrolyte Solution No. 195 | | | | | | Propane sultone | 1.00 |
| Electrolyte Solution No. 196 | | | | - | - | Fluoroethylene carbonate | 1.00 |
| Electrolyte Solution No. 197 | | | | | | Vinylene carbonate | 1.00 |
| Electrolyte Solution No. 198 | | | | | | Propane sultone | 1.00 |

### <Nonaqueous Sodium Ion Battery-2>

### [Examples 7-1 to 7-6 and Comparative Examples 7-1 to 7-6]

The same performance evaluation as in Example 1-1 was performed except that the electrolyte solutions shown in Table 19 were used as the nonaqueous electrolyte solution. Evaluation results are shown in Table 21.

**[Table 21]**

| | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 7-1 | Electrolyte Solution No. 181 | | | 104 | 91 | 84 |
| Comparative Example 7-1 | Electrolyte Solution No. 187 | | | 100 | 100 | 100 |
| Example 7-2 | Electrolyte Solution No. 182 | | | 104 | 90 | 86 |
| Comparative Example 7-2 | Electrolyte Solution No. 188 | | | 100 | 100 | 100 |
| Example 7-3 | Electrolyte Solution No. 183 | | | 107 | 90 | 93 |
| Comparative Example 7-3 | Electrolyte Solution No. 189 | NaNi_{0.5}Ti_{0.3}Mn_{0.2}O₂ | Hard carbon | 100 | 100 | 100 |
| Example 7-4 | Electrolyte Solution No. 184 | | | 107 | 89 | 55 |
| Comparative Example 7-4 | Electrolyte Solution No. 190 | | | 100 | 100 | 100 |
| Example 7-5 | Electrolyte Solution No. 185 | | | 106 | 67 | 62 |
| Comparative Example 7-5 | Electrolyte Solution No. 191 | | | 100 | 100 | 100 |
| Example 7-6 | Electrolyte Solution No. 186 | | | 105 | 70 | 64 |
| Comparative Example 7-6 | Electrolyte Solution No. 192 | | | 100 | 100 | 100 |

In Table 21, the evaluation results of Examples 7-1 to 7-6 are expressed with relative values with an evaluation result of an electrolyte solution in which the chlorine-containing compound is not added and only the second compound is added, as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Table 21, it was found that compared to an electrolyte solution containing only other additive other than the chlorine-containing compound, the addition of the chlorine-containing compound improved the cycle characteristic at the high temperature, reduced or prevented the increase in resistance, and reduced the gas generation.

### <Nonaqueous Potassium Ion Battery-2>

### [Examples 8-1 to 8-3 and Comparative Examples 8-1 to 8-3]

The same performance evaluation as in Example 6-1 was performed except that the electrolyte solutions shown in Table 20 were used as the nonaqueous electrolyte solution. Evaluation results are shown in Table 22.

### [Table 22]

**Table 22**

| Test example | Electrolyte Solution No. | Positive electrode active material | Negative electrode active material | Evaluation result | | |
|---|---|---|---|---|---|---|
| | | | | Discharge capacity maintenance rate after high-temperature cycle [%] | Resistance increase rate during high-temperature cycle [%] | Gas generation amount during high-temperature cycle [%] |
| Example 8-1 | Electrolyte Solution No. 193 | K₂Mn[Fe(CN)₆] | Artificial graphite | 104 | 94 | 86 |
| Comparative Example 8-1 | Electrolyte Solution No. 196 | | | 100 | 100 | 100 |
| Example 8-2 | Electrolyte Solution No. 194 | | | 105 | 93 | 90 |
| Comparative Example 8-2 | Electrolyte Solution No. 197 | | | 100 | 100 | 100 |
| Example 8-3 | Electrolyte Solution No. 195 | | | 104 | 94 | 88 |
| Comparative Example 8-3 | Electrolyte Solution No. 198 | | | 100 | 100 | 100 |

In Table 22, the evaluation results of Examples 8-1 to 8-3 are expressed with relative values with the evaluation result of the electrolyte solution in which the chlorine-containing compound is not added and only the second compound is added, as 100%. A larger value for the "discharge capacity maintenance rate after the high-temperature cycle" is more desirable, a smaller value for the "resistance increase rate during the high-temperature cycle" is more desirable, and a smaller value for the "gas generation amount during the high-temperature cycle" is more desirable.

From the evaluation results of Table 22, it was found that compared to the electrolyte solution containing only other additive other than the chlorine-containing compound even in the nonaqueous potassium ion battery, the addition of the chlorine-containing compound improved the cycle characteristic at the high temperature, reduced or prevented the increase in resistance, and reduced the gas generation.

### INDUSTRIAL APPLICABILITY

Embodiments of the present disclosure provide a nonaqueous electrolyte solution capable of achieving at least one of improvement in cycle characteristic at a high temperature of 60°C or higher, prevention or reduction of an increase in resistance, and reduction of gas generation in a nonaqueous sodium ion battery or a nonaqueous potassium ion battery, a nonaqueous sodium ion battery and a nonaqueous potassium ion battery using the same, a method for producing the nonaqueous sodium ion battery, and a method for producing the nonaqueous potassium ion battery.

Although the present disclosure has been described in detail and with reference to specific examples, it will be apparent to those skilled in the art that various changes and modifications can be made without departing from the spirit and scope of the present disclosure.

The present application is based on a Japanese Patent Application No. 2021-104481 filed on June 23, 2021, the contents of which are incorporated herein by reference.

## Claims

1. A nonaqueous electrolyte solution for a sodium ion battery or a potassium ion battery comprising:
(I) a nonaqueous organic solvent;
(II) a solute of an ionic salt; and
(III) at least one selected from the group consisting of an organochlorine compound, a phosphorus compound having a P-Cl bond, a sulfone compound having an S(=O)₂-Cl bond, a sulfine compound having an S(=O)-Cl bond, and a silicon compound having a Si-Cl bond.

2. The nonaqueous electrolyte solution according to claim 1,
wherein a concentration x of the (III) satisfies 0.01 mass% ≤ x ≤ 3.20 mass% in terms of a chlorine atom.

3. The nonaqueous electrolyte solution according to claim 1 or 2,
wherein the organochlorine compound comprises at least one selected from the group consisting of an aliphatic hydrocarbon compound having a C-Cl bond, an aromatic hydrocarbon compound having a C-Cl bond, a compound represented by the following Formula (1), and a compound represented by the following Formula (2), 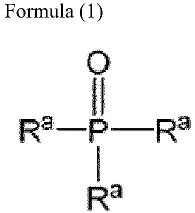
where R^{a}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{x})₂; the R^{x}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{x}s may be the same as or different from each other; the R^{x}s may bond to each other; at least one of the R^{a}s has a C-Cl bond, and the R^{a}s may be the same as or different from each other; and the R^{a}s may bond to each other, 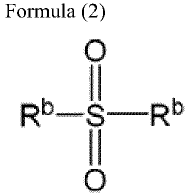
where R^{b}s in the formula each independently represent a fluorine atom, an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, an aryloxy group having 6 to 15 carbon atoms and optionally having a substituent, or N(R^{y})₂; the R^{y}s each independently represent a hydrogen atom, an alkyl group having 1 to 10 carbon atoms and optionally having a substituent, an alkenyl group having 2 to 10 carbon atoms and optionally having a substituent, or an alkynyl group having 2 to 10 carbon atoms and optionally having a substituent; the R^{y}s may be the same as or different from each other; the R^{y}s may bond to each other; at least one of the R^{b}s has a C-Cl bond, and the R^{b}s may be the same as or different from each other; and the R^{b}s may bond to each other.

4. The nonaqueous electrolyte solution according to claim 1 or 2,
wherein the phosphorus compound having a P-Cl bond comprises at least one selected from the group consisting of phosphorus trichloride, phosphorus monofluoride dichloride, phosphorus difluoride monochloride, phosphoryl chloride, phosphoryl monofluoride dichloride, phosphoryl difluoride monochloride, phosphorus pentachloride, phosphorus monofluoride tetrachloride, phosphorus difluoride trichloride, phosphorus trifluoride dichloride, phosphorus tetrafluoride monochloride, hexachloro phosphate, pentachloride monofluorophosphate, tetrachloride difluorophosphate, trichloride trifluorophosphate, dichloride tetrafluorophosphate, monochloride pentafluorophosphate, monochlorophosphate, dichlorophosphate, monochloro monofluorophosphate, a bis(dichlorophosphoryl)imide salt, dichlorophosphoryl isocyanate, monochloro monofluorophosphoryl isocyanate, a compound represented by the following Formula (A), a compound represented by the following Formula (B), and a compound represented by the following Formula (C), 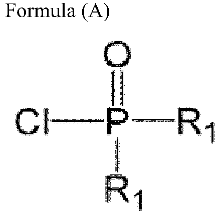
where R₁s in the formula each independently represent an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent; the R₁s may be the same as or different from each other; and the R₁s may bond to each other, 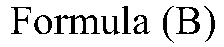 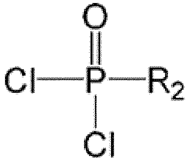
where R₂ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent, 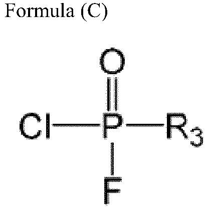
where R₃ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.

5. The nonaqueous electrolyte solution according to claim 1 or 2,
wherein the sulfone compound having an S(=O)₂-Cl bond comprises at least one selected from the group consisting of sulfuryl chloride, sulfuryl chlorofluoride, chloromethanesulfonyl chloride, methanedisulfonyl dichloride, 1,3-propane disulfonyl dichloride, chlorosulfonyl isocyanate, chlorosulfonic acid, a chlorosulfonate, a bis(chlorosulfonyl)imide salt, a (dichlorophosphoryl)(chlorosulfonyl)imide salt, a (difluorophosphoryl)(chlorosulfonyl)imide salt, and a compound represented by the following Formula (D), 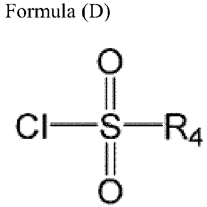
where R₄ in the formula represents an alkyl group having 1 to 10 carbon atoms and optionally having a substituent, an alkoxy group having 1 to 10 carbon atoms and optionally having a substituent, an alkenyl group having 2 to 10 carbon atoms and optionally having a substituent, an alkenyloxy group having 2 to 10 carbon atoms and optionally having a substituent, an alkynyl group having 2 to 10 carbon atoms and optionally having a substituent, an alkynyloxy group having 2 to 10 carbon atoms and optionally having a substituent, an aryl group having 6 to 15 carbon atoms and optionally having a substituent, or an aryloxy group having 6 to 15 carbon atoms and optionally having a substituent.

6. The nonaqueous electrolyte solution according to claim 1 or 2,
wherein the sulfine compound having an S(=O)-Cl bond comprises at least one selected from the group consisting of sulfinyl chloride, sulfinyl chloride fluoride, methylsulfinyl chloride, ethylsulfinyl chloride, and t-butylsulfinyl chloride.

7. The nonaqueous electrolyte solution according to claim 1 or 2,
wherein the silicon compound having a Si-Cl bond comprises at least one selected from the group consisting of trialkylchlorosilane, dialkyldichlorosilane, alkyltrichlorosilane, tetrachlorosilane, dialkylchlorohydrosilane, alkyldichlorohydrosilane, and alkylchlorodihydrosilane.

8. The nonaqueous electrolyte solution according to claim 1 or 2,
wherein the (II) is an ionic salt containing a pair of a cation consisting of sodium, and at least one anion selected from the group consisting of a hexafluorophosphate anion, a difluorophosphate anion, a monofluorophosphate anion, a tetrafluoroborate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

9. The nonaqueous electrolyte solution according to claim 1 or 2,
wherein the (II) is an ionic salt containing a pair of a cation consisting of potassium, and at least one anion selected from the group consisting of a hexafluorophosphate anion, a difluorophosphate anion, a monofluorophosphate anion, a tetrafluoroborate anion, a difluorooxalatoborate anion, a tetrafluorooxalatophosphate anion, a difluorobisoxalatophosphate anion, a trisoxalatophosphate anion, a trifluoromethanesulfonate anion, a fluorosulfonate anion, a bis(trifluoromethanesulfonyl)imide anion, a bis(fluorosulfonyl)imide anion, a (trifluoromethanesulfonyl)(fluorosulfonyl)imide anion, a bis(difluorophosphoryl)imide anion, a (difluorophosphoryl)(fluorosulfonyl)imide anion, and a (difluorophosphoryl)(trifluoromethanesulfonyl)imide anion.

10. The nonaqueous electrolyte solution according to claim 1 or 2,
wherein the (I) comprises at least one selected from the group consisting of a cyclic ester, a chain ester, a cyclic ether, and a chain ether.

11. The nonaqueous electrolyte solution according to claim 10,
wherein a part or all of the cyclic ester is a cyclic carbonate.

12. The nonaqueous electrolyte solution according to claim 10,
wherein a part or all of the chain ester is a chain carbonate.

13. The nonaqueous electrolyte solution according to claim 1 or 2,
wherein the (I) comprises at least one selected from the group consisting of ethylene carbonate, propylene carbonate, butylene carbonate, dimethyl carbonate, diethyl carbonate, ethyl methyl carbonate, γ-butyrolactone, methyl acetate, ethyl acetate, methyl propionate, ethyl propionate, 1,3-dioxolane, 2-methyl-1,3-dioxolane, 4-methyl-1,3-dioxolane, dimethoxyethane, diethoxyethane, ethoxy-methoxy ethane, diethylene glycol dimethyl ether, triethylene glycol dimethyl ether, tetraethylene glycol dimethyl ether, and dipropylene glycol dimethyl ether.

14. The nonaqueous electrolyte solution according to claim 1 or 2, further comprising:
at least one additive selected from the group consisting of cyclohexylbenzene, t-butyl benzene, t-amyl benzene, fluorobenzene, vinylene carbonate, a vinylene carbonate oligomer having a number average molecular weight of 170 to 5,000, vinyl ethylene carbonate, fluoroethylene carbonate, 1,6-diisocyanatohexane, ethynylethylene carbonate, trans-difluoroethylene carbonate, 1,3-propane sultone, 1,3-propene sultone, 1,3,2-dioxathiolane-2,2-dioxide, 4-propyl-1,3,2-dioxathiolane-2,2-dioxide, methylene methanedisulfonate, 1,2-ethanedisulfonic anhydride, tris(trimethylsilyl)borate, succinonitrile, adiponitrile, (ethoxy)pentafluorocyclotriphosphazene, methanesulfonyl fluoride, tetrafluoro(picolinato)phosphate, and 1,3-dimethyl-1,3-divinyl-1,3-di(1,1,1,3,3,3-hexafluoroisopropyl)disiloxane.

15. A nonaqueous sodium ion battery comprising:
at least a positive electrode; a negative electrode; and the nonaqueous electrolyte solution according to claim 1 or 2.

16. A nonaqueous potassium ion battery comprising:
at least a positive electrode; a negative electrode; and the nonaqueous electrolyte solution according to claim 1 or 2.

17. A method for producing a nonaqueous sodium ion battery, comprising:
preparing the nonaqueous electrolyte solution according to claim 1 or 2; and
filling an empty cell including at least a positive electrode and a negative electrode with the nonaqueous electrolyte solution.

18. A method for producing a nonaqueous potassium ion battery, comprising:
preparing the nonaqueous electrolyte solution according to claim 1 or 2; and
filling an empty cell including at least a positive electrode and a negative electrode with the nonaqueous electrolyte solution.
